# EUROPEAN PATENT SPECIFICATION

(11) **EP 4 568 187 B1**
(45) Date of publication and mention of the grant of the patent: **30.09.2026**
(21) Application number: 23863353.1
(22) Date of filing: 03.08.2023
(51) Int. Cl.: H04L 12/28, H04L 67/12, H04W 4/021, H04W 84/18, G16Y 10/80, G16Y 20/10, H04W 16/16, H04L 69/24

(54) **ELECTRONIC DEVICE FOR MANAGING THREAD NETWORKS AND METHOD FOR OPERATING SAME**
ELEKTRONISCHE VORRICHTUNG ZUR VERWALTUNG VON THREAD-NETZWERKEN UND VERFAHREN ZUM BETRIEB DAVON
DISPOSITIF ÉLECTRONIQUE DE GESTION DE RÉSEAUX THREAD ET SON PROCÉDÉ DE FONCTIONNEMENT

(30) Priority: 08.09.2022 KR 20220114059; 13.10.2022 KR 20220131673
(43) Date of publication of application: 11.06.2025
(73) Proprietor: Samsung Electronics Co., Ltd., Suwon-si, Gyeonggi-do 16677 (KR)
(72) Inventor: LEE, Dooho, Suwon-si Gyeonggi-do 16677 (KR); KIM, Moonsoo, Suwon-si Gyeonggi-do 16677 (KR); KIM, Jinwon, Suwon-si Gyeonggi-do 16677 (KR); YOO, Hyungseoung, Suwon-si Gyeonggi-do 16677 (KR); LEE, Sangsoo, Suwon-si Gyeonggi-do 16677 (KR); LEE, Junwoo, Suwon-si Gyeonggi-do 16677 (KR); LEE, Sunkey, Suwon-si Gyeonggi-do 16677 (KR)
(74) Representative: Appleyard Lees IP LLP
(86) International application number: PCT/KR2023/011425
(87) International publication number: WO 2024/053872

(56) References cited:
- WO-A1-2021/231844
- KR-A- 20200 135 525
- KR-A- 20210 054 060
- US-A1- 2018 077 637
- US-A1- 2020 169 864
- US-A1- 2020 252 325
- US-A1- 2020 252 326

## Description

### [Technical Field]

An embodiment of the disclosure relates to an electronic device for managing thread networks and an operating method thereof.

### [Background Art]

The Internet, which is a human centered connectivity network where humans generate and consume information, is now evolving to the Internet of things (IoT) network where distributed entities, such as things, exchange and process information. The Internet of everything (IoE) technology may be an example in which a big data processing technology through connection with a cloud server is combined with the IoT technology.

As technology elements, such as a sensing technology, a wired/wireless communication and network infrastructure, a service interface technology, and a security technology have been demanded for implementing the IoT technology, and various technologies for a connection between things such as a sensor network, a machine-to-machine (M2M) communication, machine type communication (MTC), and so forth have been recently researched.

Such an IoT environment may provide intelligent Internet technology (IT) services that create a new value to human life by collecting and analyzing data generated among connected things. The IoT technology may be applied to various services such as a smart home service, a smart building service, a smart city service, a smart car service or connected car service, a smart grid service, a health care service, a smart appliance service, or and an advanced medical service through convergence and combination between an existing IT technology and various industrial applications.

Recently, with the development of an information and communication technology, various wireless communication technologies and various services have been developed. In particular, the various wireless communication technologies and the various services have been developed due to the development of an IoT technology. A Thread technology, one of the IoT technologies, is a wireless mesh network technology based on Institute of Electrical and Electronics Engineers (IEEE) 802.15.4. The Thread technology is the wireless mesh network technology which provides an enhanced security function by applying a power function of Zigbee which is a low-power wireless communication technology and an advanced encryption standard (AES) based on IPv6 over low-power wireless personal area networks (6LoWPAN) which are a low-power short-range wireless network which uses an Internet protocol (IP) version 6 (IPv6).

The thread network based on the Thread technology is a wireless network implemented based on a low-power mesh network, and each of thread devices may perform a scan operation in the thread network. The thread device performs a scan operation, and if a counterpart thread device is connectable to the thread device, the thread device basically attempts to establish a connection with the counterpart thread device. For example, the thread device may compare information of the thread device with information of the counterpart thread device to establish the connection with the counterpart thread device, and if the information of the thread device and the information of the counterpart thread device are identical, the counterpart thread device which exists within a physical discoverable distance of the thread device may compose a single thread network together with the thread device.

If the information of a thread device and the information of the counterpart thread device are not identical, the thread device may compose a thread network in which the thread device itself operates as a leader and operates as a router.

If a home IoT environment is an environment in which all areas (e.g., spaces) within a home are composed as a thread network, a plurality of spaces (e.g., a fitness room, a living room, and/or a kitchen) may exist in the home. For example, a single thread network may be composed by installing a relatively large number of thread devices in the fitness room and the living room. When the thread network is initially composed, a non-congested channel (e.g., a channel 18) is selected from among a plurality of channels, and the selected channel may be used in the thread network. Accordingly, all thread devices included in the thread network may be connected via the channel 18. Here, the channel 18 may be an operation channel of the thread network.

After the thread network is composed, a user in the fitness room may connect a smart phone to a television via screen mirroring to watch a video while exercising. The screen mirroring may be done via an IEEE 802.11-based (e.g., Wi-Fi-based) channel 6, rather than the channel 18 (e.g., IEEE 802.15.4-based channel 18) used in the thread network. The IEEE 802.15.4-based channel 18 may use a frequency band of 2440 MHz, while the IEEE 802.11-based channel 6 may use a frequency band of 2437 MHz, which is close to the frequency band of 2440 MHz.

In services which use close frequency bands in the same space, interference in data communication may occur, so service quality may be degraded. In particular, since the thread network uses a low-power transmission/reception mechanism based on the IEEE 802.15.4, it may be vulnerable to interference in a frequency band. If a retransmission ratio between thread devices increases, or a keep alive operation between the thread devices is not performed normally, an arbitrary thread device may identify that a connection between the arbitrary thread device and a counterpart thread device is released even though the counterpart thread device exists at a relatively close distance which the arbitrary thread device may physically discover.

Prior art document US2020/0252325A1 discloses a mechanism for discovering, ranking, and merging hierarchical subnets in a Thread mesh network.

Another prior art document US2020/0252326A1 discloses a mechanism for automatically promoting a node from end device to router when routing propagation in a Thread network deteriorates.

To solve an issue due to the interference in the frequency band, a new channel in which interference does not occur may be selected and the selected new channel may be set as a new operation channel of the thread network. However, even if the operation channel of the thread network is changed to the newly selected channel, interference may still occur in the newly selected channel, and in this case, the operation channel of the thread network may need to be changed again.

### [Detailed Description of the Invention]

### [Technical Solution]

According to an embodiment of the disclosure, an electronic device may include at least one communication circuit, and at least one processor operably connected to the at least one communication circuit.

According to an embodiment of the disclosure, the at least one processor may be configured to, based on identification of a registration request for an external electronic device, register the external electronic device to correspond to a first area among a plurality of areas managed by the electronic device.

According to an embodiment of the disclosure, the at least one processor may be configured to transmit area information related to the first area to the external electronic device via the at least one communication circuit.

According to an embodiment of the disclosure, the area information may include first information indicating whether a thread network partition is divided based on a position, and second information indicating a position of the first area.

According to an embodiment of the disclosure, an electronic device may include at least one communication circuit, and at least one processor operably connected to the at least one communication circuit.

According to an embodiment of the disclosure, the at least one processor may be configured to, based on the electronic device being registered to correspond to a first area among a plurality of areas managed by a first external electronic device, receive, via the at least one communication circuit, first area information related to the first area from the first external electronic device.

According to an embodiment of the disclosure, the at least one processor may be configured to, based on the first area information, determine whether to merge a first thread network partition to which the electronic device belongs with a second thread network partition to which a second external electronic device belongs, or to maintain the first thread network partition independently from the second thread network partition.

According to an embodiment of the disclosure, the first area information may include first information indicating whether a thread network partition is to be divided based on a position, and second information indicating a position of the first area.

According to an embodiment of the disclosure, an operating method of an electronic device may include, based on identification of a registration request for an external electronic device, registering the external electronic device to correspond to a first area among a plurality of areas managed by the electronic device.

According to an embodiment of the disclosure, the operating method may include transmitting area information related to the first area to the external electronic device.

According to an embodiment of the disclosure, the area information may include first information indicating whether a thread network partition is divided based on a position, and second information indicating a position of the first area.

According to an embodiment of the disclosure, an operating method of an electronic device may include, based on the electronic device being registered to correspond to a first area among a plurality of areas managed by a first external electronic device, receiving first area information related to the first area from the first external electronic device.

According to an embodiment of the disclosure, the operating method may include, based on the first area information, determining whether to merge a first thread network partition to which the electronic device belongs with a second thread network partition to which a second external electronic device belongs, or to maintain the first thread network partition independently from the second thread network partition.

According to an embodiment of the disclosure, the first area information may include first information indicating whether a thread network partition is to be divided based on a position, and second information indicating a position of the first area.

According to an embodiment of the disclosure, a non-transitory computer-readable storage medium may include one or more programs, which are executed by at least one processor of an electronic device and include instructions which are configured to cause the electronic device to, based on identification of a registration request for an external electronic device, register the external electronic device to correspond to a first area among a plurality of areas managed by the electronic device.

According to an embodiment of the disclosure, the instructions may be configured to cause the electronic device to transmit area information related to the first area to the external electronic device.

According to an embodiment of the disclosure, the area information may include first information indicating whether a thread network partition is divided based on a position, and second information indicating a position of the first area.

According to an embodiment of the disclosure, a non-transitory computer-readable storage medium may include one or more programs, which are executed by at least one processor of an electronic device and include instructions which are configured to cause the electronic device to, based on the electronic device being registered to correspond to a first area among a plurality of areas managed by a first external electronic device, receive first area information related to the first area from the first external electronic device.

According to an embodiment of the disclosure, the instructions may be configured to cause the electronic device to, based on the first area information, determine whether to merge a first thread network partition to which the electronic device belongs with a second thread network partition to which a second external electronic device belongs, or to maintain the first thread network partition independently from the second thread network partition.

According to an embodiment of the disclosure, the first area information may include first information indicating whether a thread network partition is to be divided based on a position, and second information indicating a position of the first area.

### [Brief Description of the Drawings]

FIG. 1 is a block diagram schematically illustrating an electronic device within a network environment according to an embodiment.
FIG. 2 is a block diagram illustrating an electronic device according to an embodiment.
FIG. 3 is a block diagram illustrating an external electronic device according to an embodiment.
FIG. 4 is a diagram schematically illustrating a topology of a Thread technology in an enterprise network according to an embodiment of the disclosure.
FIG. 5 is a flowchart schematically illustrating an example of an operating process of an electronic device according to an embodiment of the disclosure.
FIG. 6 is a diagram for explaining a screen displayed on an electronic device and position information (Position Info) assigned to each of a plurality of areas if the plurality of areas are registered in an IoT-based application according to an embodiment of the disclosure.
FIG. 7 is a diagram illustrating a format of Position Info according to an embodiment of the disclosure.
FIG. 8 is a flowchart illustrating an operating process of an external electronic device according to an embodiment of the disclosure.
FIG. 9 is a diagram illustrating a format of an MLE message in which Position Info is included according to an embodiment of the disclosure.
FIG. 10 is a diagram for explaining a Thread Network Partition-merging operation according to an embodiment of the disclosure.
FIG. 11 is a diagram illustrating a format of a Leader data TLV in which Leader data is included according to an embodiment of the disclosure.
FIG. 12 is a diagram for explaining a Thread Network Partition-merging operation according to an embodiment of the disclosure.
FIG. 13 is a diagram for explaining a Thread Network Partition-merging operation according to an embodiment of the disclosure.
FIG. 14 is a diagram for explaining a Thread Network Partition-merging operation according to an embodiment of the disclosure.
FIG. 15 is a diagram for explaining a Thread Network Partition-merging operation according to an embodiment of the disclosure.
FIG. 16 is a diagram for explaining a Thread Network Partition-merging operation according to an embodiment of the disclosure.
FIG. 17 is a diagram for explaining an attaching operation to a thread network according to an embodiment of the disclosure.
FIG. 18 is a diagram for explaining an attaching operation to a thread network according to an embodiment of the disclosure.
FIG. 19 is a diagram for explaining an attaching operation to a thread network according to an embodiment of the disclosure.
FIG. 20 is a diagram for explaining an attaching operation to a thread network according to an embodiment of the disclosure.
FIG. 21 is a diagram for explaining an attaching operation to a thread network according to an embodiment of the disclosure.
FIG. 22 is a diagram for explaining an attaching operation to a thread network according to an embodiment of the disclosure.
FIG. 23a is a flowchart illustrating an operating process of an external electronic device according to an embodiment of the disclosure.
FIG. 23b is a flowchart illustrating an operating process of an external electronic device according to an embodiment of the disclosure.
FIG. 24 is a diagram for explaining a Thread Network Partition-dividing operation according to an embodiment of the disclosure.
FIG. 25 is a diagram for explaining a Thread Network Partition-dividing operation according to an embodiment of the disclosure.
FIG. 26 is a diagram for explaining a Thread Network Partition-dividing operation according to an embodiment of the disclosure.
FIG. 27 is a diagram for explaining a Thread Network Partition-dividing operation according to an embodiment of the disclosure.
FIG. 28 is a diagram for explaining a Thread Network Partition-dividing operation according to an embodiment of the disclosure.
FIG. 29 is a flowchart illustrating an operating process of an external electronic device according to an embodiment of the disclosure.
FIG. 30 is a diagram for explaining a Thread Network Partition-merging operation according to an embodiment of the disclosure.
FIG. 31 is a diagram for explaining a Thread Network Partition-merging operation according to an embodiment of the disclosure.
FIG. 32 is a diagram for explaining a Thread Network Partition-merging operation according to an embodiment of the disclosure.
FIG. 33 is a diagram for explaining a Thread Network Partition-merging operation according to an embodiment of the disclosure.
FIG. 34 is a flowchart illustrating an operating process of an external electronic device according to an embodiment of the disclosure.

### [Mode for Carrying out the Invention]

Hereinafter, an embodiment of the disclosure will be described in detail with reference to the accompanying drawings. In the following description of an embodiment of the disclosure, a detailed description of relevant known functions or configurations incorporated herein will be omitted when it is determined that the description may make the subject matter of an embodiment of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

It should be noted that the technical terms used herein are only used to describe an embodiment, and are not intended to limit an embodiment of the disclosure. Alternatively, the technical terms used herein should be interpreted to have the same meaning as those commonly understood by a person skilled in the art to which the disclosure pertains, and should not be interpreted have excessively comprehensive or excessively restricted meanings unless particularly defined as other meanings. Alternatively, when the technical terms used herein are wrong technical terms that cannot correctly represent the idea of the disclosure, it should be appreciated that they are replaced by technical terms correctly understood by those skilled in the art. Alternatively, the general terms used in an embodiment of the disclosure should be interpreted as defined in dictionaries or interpreted in the context of the relevant part, and should not be interpreted to have excessively restricted meanings.

Alternatively, a singular expression used herein may include a plural expression unless they are definitely different in the context. As used herein, such an expression as "comprises" or "include", or the like should not be interpreted to necessarily include all elements or all operations described in the specification, and should be interpreted to be allowed to exclude some of them or further include additional elements or operations.

Alternatively, the terms including an ordinal number, such as expressions "a first" and "a second" may be used to describe various elements, but the corresponding elements should not be limited by such terms. These terms are used merely to distinguish between one element and any other element. For example, a first element may be termed a second element, and similarly, a second element may be termed a first element without departing from the scope of the disclosure.

It should be understood that when an element is referred to as being "connected" or "coupled" to another element, it may be connected or coupled directly to the other element, or any other element may be interposer between them. In contrast, it should be understood that when an element is referred to as being "directly connected" or "directly coupled" to another element, there are no element interposed between them.

Hereinafter, an embodiment of the disclosure will be described in detail with reference to the accompanying drawings. Regardless of drawing signs, the same or like elements are provided with the same reference numeral, and a repeated description thereof will be omitted. Alternatively, in describing an embodiment of the disclosure, a detailed description of relevant known technologies will be omitted when it is determined that the description may make the subject matter of the disclosure unclear. Alternatively, it should be noted that the accompanying drawings are presented merely to help easy understanding of the technical idea of the disclosure, and should not be construed to limit the technical idea of the disclosure. The technical idea of the disclosure should be construed to cover all changes, equivalents, and alternatives, in addition to the drawings.

Hereinafter, an embodiment of the disclosure will describe an electronic device as an example, but the electronic device may be referred to as a terminal, a mobile station, a mobile equipment (ME), a user equipment (UE), a user terminal (UT), a subscriber station (SS), a wireless device, a handheld device, and an access terminal (AT). Alternatively, in an embodiment of the disclosure, the electronic device may be a device having a communication function such as, for example, a mobile phone, a personal digital assistant (PDA), a smart phone, a wireless MODEM, and a notebook.

Hereinafter, in a detailed description of an embodiment of the disclosure, a Thread technical specification which is a mesh network technology based on Institute of Electrical and Electronics Engineers (IEEE) 802.15.4, are referred to, but the main subject of the disclosure may be somewhat modified and applied to communication systems, which uses other specifications, having a similar technical background without departing from the scope of the disclosure, and the modifications can be made on the basis of determination of those skilled in the art.

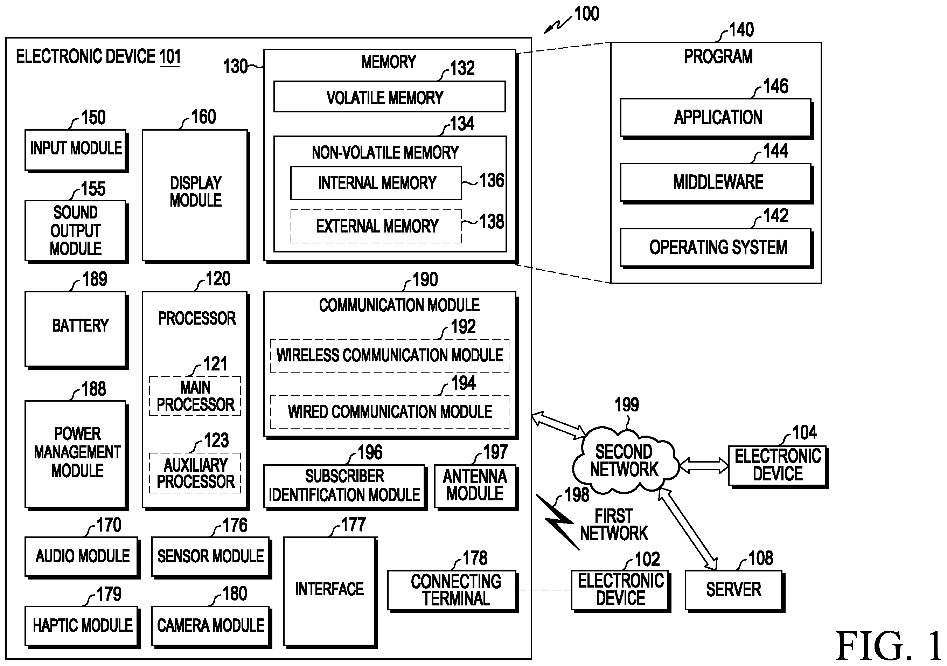

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence model is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to an embodiment and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1^{st}" and "2^{nd}," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or two or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

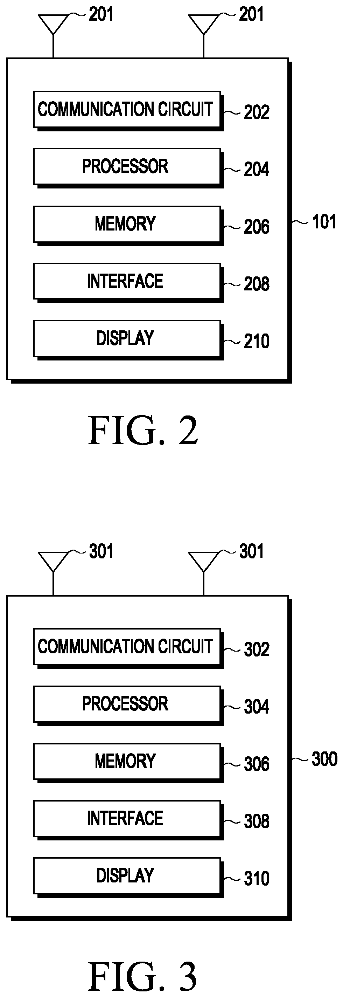

FIG. 2 is a block diagram illustrating an electronic device 101 according to an embodiment.

Referring to FIG. 2, an electronic device 101 (e.g., an electronic device 101 in FIG. 1) may be an electronic device (e.g., a smartphone) which composes a thread network according to a Thread technology. The electronic device 101 may be a leader thread device or a node thread device. In an embodiment, the thread network may mean a thread network partition.

The electronic device 101 (e.g., a smart phone) may include antennas 201, a communication circuit 202, a processor 204, memory 206, an interface 208, and a display 210.

The electronic device 101 may be a device supporting a long term evolution (LTE) scheme, a Zigbee scheme, a Z-Wave scheme, a Wi-Fi scheme, a low energy Bluetooth (BLE) scheme, a ultra wide band (UWB) scheme, and/or a global positioning system (GPS) scheme. The electronic device 101 may include a communication circuit 202 (e.g., a communication module 190 in FIG. 1) for transmitting and receiving signals to and from an external electronic device (e.g., an electronic device 102 in FIG. 1) using one or more antennas 201. In an embodiment, the one or more antennas 201 may be implemented as a part of an antenna module 198 in FIG. 1.

According to an embodiment, the communication circuit 202 may include a plurality of communication circuits, and the plurality of communication circuits may include a communication circuit which is based on the LTE scheme, the BLE scheme, the UWB scheme, the Zigbee scheme, the Z-wave scheme, and/or the Wi-Fi scheme. According to an embodiment, the electronic device 101 may not include a separate communication circuit which is based on each of the LTE scheme, the BLE scheme, the UWB scheme, the Zigbee scheme, the Z-Wave scheme, and/or the Wi-Fi scheme, and may include a communication circuit which is based on at least two of the LTE scheme, the BLE scheme, the UWB scheme, the Zigbee scheme, the Z-Wave scheme, and/or the Wi-Fi scheme, or all of the LTE scheme, the BLE scheme, the UWB scheme, the Zigbee scheme, the Z-Wave scheme, and/or the Wi-Fi scheme. According to an embodiment, the communication circuit which is based on the at least two of the LTE scheme, the BLE scheme, the UWB scheme, the Zigbee scheme, the Z-Wave scheme, and/or the Wi-Fi scheme, or all of the LTE scheme, the BLE scheme, the UWB scheme, the Zigbee scheme, the Z-Wave scheme, and/or the Wi-Fi scheme may be the communication circuit 202.

The electronic device 101 may include an interface 208 (e.g., an interface 177 in FIG. 1) which provides a wired and/or wireless interface for communicating with components outside a network. In an embodiment, at least a portion of the one or more antennas 201, the communication circuit 202, or the interface 208 may be implemented as at least a portion of the communication module 190 and the antenna module 198 in FIG. 1.

The electronic device 101 may include a processor 204 (e.g., a processor 120 in FIG. 1) which may be implemented with one or more single-core processors or one or more multi-core processors, and memory 206 (e.g., memory 130 in FIG. 1) which stores instructions for an operation of the electronic device 101.

According to an embodiment, the memory 206 may include a user interface (UI) related to an IoT-based application which controls and/or manages an external electronic device (e.g. Samsung^{™} SmartThings application), and images, user information, documents, databases, or related data for providing the UI. According to an embodiment, when a finding service of the processor 204 and/or an application for executing the finding service are executed, the display 210 (e.g., a display module 160 in FIG. 1) may display a UI related to the corresponding application being executed.

FIG. 3 is a block diagram illustrating an external electronic device 300 according to an embodiment.

Referring to FIG. 3, the external electronic device 300 (e.g., an electronic device 102 in FIG. 1) may be an electronic device (e.g., an IoT device) which composes a thread network according to a Thread technology. The external electronic device 300 may be a Leader thread device or a Node thread device.

The external electronic device 300 may include antennas 301, a communication circuit 302, a processor 304, memory 306, an interface 308, and/or a display 310.

In an embodiment, the antennas 301, the communication circuits 302, the processor 304, the memory 306, the interface 308, and/or the display 310 may be implemented to be similar to or substantially the same as antennas 201, a communication circuit 202, a processor 204, memory 206, an interface 208, and/or a display 210 described in FIG. 2, so a detailed description thereof will be omitted.

According to an embodiment of the disclosure, an electronic device (e.g., an electronic device 101 in FIG. 1 or FIG. 2) may include at least one communication circuit (e.g., a communication module 190 in FIG. 1 or a communication circuit 202 in FIG. 2), and at least one processor (e.g., a processor 120 in FIG. 1 or a processor 204 in FIG. 2) operably connected to the at least one communication circuit (e.g., the communication module 190 in FIG. 1 or the communication circuit 202 in FIG. 2).

According to an embodiment of the disclosure, the at least one processor (e.g., the processor 120 in FIG. 1 or the processor 204 in FIG. 2) may be configured to, based on identification of a registration request for an external electronic device (e.g., an electronic device 102 in FIG. 1 or an external electronic device 300 in FIG. 3), register the external electronic device (e.g., the electronic device 102 in FIG. 1 or the external electronic device 300 in FIG. 3) to correspond to a first area among a plurality of areas managed by the electronic device (e.g., the electronic device 101 in FIG. 1 or FIG. 2).

According to an embodiment of the disclosure, the at least one processor (e.g., the processor 120 in FIG. 1 or the processor 204 in FIG. 2) may be configured to transmit area information related to the first area to the external electronic device (e.g., the electronic device 102 in FIG. 1 or the external electronic device 300 in FIG. 3) via the at least one communication circuit (e.g., the communication module 190 in FIG. 1 or the communication circuit 202 in FIG. 2).

According to an embodiment of the disclosure, the area information may include first information indicating whether a thread network partition is divided based on a position, and second information indicating a position of the first area.

According to an embodiment of the disclosure, the first information may include a first value indicating that the thread network partition is divided based on the position, or a second value indicating that the thread network partition is not divided based on the position.

According to an embodiment of the disclosure, the at least one processor (e.g., the processor 120 in FIG. 1 or the processor 204 in FIG. 2) may be configured to, after transmitting the area information, identify that the first information including the first value or the second value is changed.

According to an embodiment of the disclosure, the at least one processor (e.g., the processor 120 in FIG. 1 or the processor 204 in FIG. 2) may be configured to transmit the changed first information to the external electronic device (e.g., the electronic device 102 in FIG. 1 or the external electronic device 300 in FIG. 3) via the at least one communication circuit (e.g., the communication module 190 in FIG. 1 or the communication circuit 202 in FIG. 2).

According to an embodiment of the disclosure, a thread network partition to which area information in which the first information is a first value indicating that the thread network partition is divided based on the position, and the second information is a fourth value different from a third value indicating the position of the first area is applied, and a thread network partition to which area information in which the first information is the first value and the second information is the third value is applied may not be merged.

According to an embodiment of the disclosure, a thread network partition to which area information in which the first information is a first value indicating that the thread network partition is divided based on the position, and the second information is a third value indicating the position of the first area is applied, and another thread network partition to which the area information in which the first information is the first value and the second information is the third value is applied may be merged.

According to an embodiment of the disclosure, a thread network partition to which area information in which the first information is a second value indicating that the thread network partition is not divided based on the position is applied, and another thread network partition to which the area information in which the first information is the second value is applied may be merged.

According to an embodiment of the disclosure, an electronic device (e.g., an electronic device 102 in FIG. 1 or an external electronic device 300 in FIG. 3) may include at least one communication circuit (e.g., a communication circuit 302 in FIG. 3), and at least one processor (e.g., a processor 304 in FIG. 3) operably connected to the at least one communication circuit (e.g., the communication circuit 302 in FIG. 3).

According to an embodiment of the disclosure, the at least one processor (e.g., the processor 304 in FIG. 3) may be configured to, based on the electronic device (e.g., the electronic device 102 in FIG. 1 or the external electronic device 300 in FIG. 3) being registered to correspond to a first area among a plurality of areas managed by a first external electronic device (e.g., an electronic device 101 in FIG. 1 or FIG. 2), receive, via the at least one communication circuit (e.g., the communication circuit 302 in FIG. 3), first area information related to the first area from the first external electronic device (e.g., the electronic device 101 in FIG. 1 or FIG. 2).

According to an embodiment of the disclosure, the at least one processor (e.g., the processor 304 in FIG. 3) may be configured to, based on the first area information, determine whether to merge a first thread network partition to which the electronic device (e.g., the electronic device 102 in FIG. 1 or the external electronic device 300 in FIG. 3) belongs with a second thread network partition to which a second external electronic device (e.g., the electronic device 102 in FIG. 1 or the external electronic device 300 in FIG. 3) belongs, or to maintain the first thread network partition independently from the second thread network partition.

According to an embodiment of the disclosure, the first area information may include first information indicating whether a thread network partition is to be divided based on a position, and second information indicating a position of the first area.

According to an embodiment of the disclosure, the at least one processor (e.g., the processor 304 in FIG. 3) may be configured to transmit, via the at least one communication circuit (e.g., the communication circuit 302 in FIG. 3), the first area information to a third external electronic device (e.g., the electronic device 102 in FIG. 1 or the external electronic device 300 in FIG. 3) included in the first thread network partition.

According to an embodiment of the disclosure, the first information may include a first value indicating that the thread network partition is divided based on the position, or a second value indicating that the thread network partition is not divided based on the position.

According to an embodiment of the disclosure, the at least one processor (e.g., the processor 304 in FIG. 3) may be configured to receive, via the at least one communication circuit (e.g., the communication circuit 302 in FIG. 3), first information in which the first value or the second value is changed, from the external electronic device.

According to an embodiment of the disclosure, the at least one processor (e.g., the processor 304 in FIG. 3) may be configured to transmit, via the at least one communication circuit (e.g., the communication circuit 302 in FIG. 3), the changed first information to the third external electronic device included in the first thread network partition.

According to an embodiment of the disclosure, the at least one processor (e.g., the processor 304 in FIG. 3) may be configured to receive, via the at least one communication circuit (e.g., the communication circuit 302 in FIG. 3), second area information applied to the second thread network partition from a fourth external electronic device (e.g., the electronic device 102 in FIG. 1 or the external electronic device 300 in FIG. 3) included in the second thread network partition.

According to an embodiment of the disclosure, the at least one processor (e.g., the processor 304 in FIG. 3) may be configured to identify whether each of the first information included in the first area information and the first information included in the second area information is a first value indicating that the thread network partition is divided based on the position.

According to an embodiment of the disclosure, the at least one processor (e.g., the processor 304 in FIG. 3) may be configured to, based on each of the first information included in the first area information and the first information included in the second area information being the first value, identify whether a value of the second information included in the second area information is identical to a third value indicating the position of the first area which is included in the second area information.

According to an embodiment of the disclosure, the at least one processor (e.g., the processor 304 in FIG. 3) may be configured to, based on the value of the second information included in the second area information being identical to the third value, determine to merge the first thread network partition and the second thread network partition.

According to an embodiment of the disclosure, the at least one processor (e.g., the processor 304 in FIG. 3) may be configured to, based on the value of the second information included in the second area information being different from the third value, determine to maintain the first thread network partition independently from the second thread network partition.

According to an embodiment of the disclosure, the at least one processor (e.g., the processor 304 in FIG. 3) may be configured to receive, via the at least one communication circuit (e.g., the communication circuit 302 in FIG. 3), second area information applied to the second thread network partition from a fourth external electronic device (e.g., the electronic device 102 in FIG. 1 or the external electronic device 300 in FIG. 3) included in the second thread network partition.

According to an embodiment of the disclosure, the at least one processor (e.g., the processor 304 in FIG. 3) may be configured to identify whether a value of the first information included in the first area information and a value of the first information included in the second area information are identical.

According to an embodiment of the disclosure, the at least one processor (e.g., the processor 304 in FIG. 3) may be configured to, based on the value of the first information included in the first area information and the value of the first information included in the second area information being different, determine to maintain the first thread network partition independently from the second thread network partition.

According to an embodiment of the disclosure, the at least one processor (e.g., the processor 304 in FIG. 3) may be configured to, based on the value of the first information included in the first area information and the value of the first information included in the second area information being identical, identify whether the value of the first information included in the first area information and the value of the first information included in the second area information are a second value indicating that the thread network partition is not divided based on the position.

According to an embodiment of the disclosure, the at least one processor (e.g., the processor 304 in FIG. 3) may be configured to, based on the value of the first information included in the first area information and the value of the first information included in the second area information being a first value indicating that the thread network partition is divided based on the position, identify whether a value of the second information included in the first area information and a value of the second information included in the second area information are identical.

According to an embodiment of the disclosure, the at least one processor (e.g., the processor 304 in FIG. 3) may be configured to, based on the value of the second information included in the first area information and the value of the second information included in the second area information being not identical, determine to maintain the first thread network partition independently from the second thread network partition.

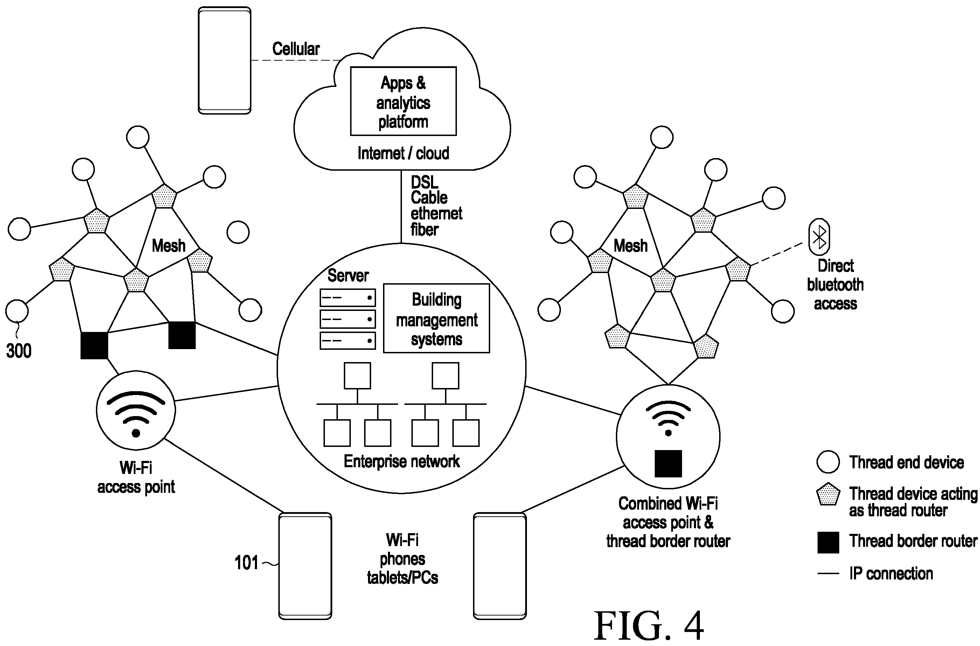

FIG. 4 is a diagram schematically illustrating a topology of a Thread technology in an enterprise network according to an embodiment of the disclosure.

Referring to FIG. 4, a topology illustrated in FIG. 4 illustrates a scheme in which a Thread technology is implemented in an enterprise network environment. The Thread technology is based on IP version 6 (IPv6) and may support an end-to-end communication across different link technologies.

The Thread technology is a mesh network technology, so in a mesh network, a thread device may not only receive data, but also transfer data to other thread devices. In this way, thread devices may operate as thread routers, and this may enable a stable network with a wide coverage without repeaters.

In FIG. 4, an electronic device 101 (e.g., a smart phone) (e.g., an electronic device 101 in FIG. 1 or FIG. 2) may be equipped with an application which supports a function of controlling an external electronic device 300 (e.g., an IoT device or a thread device) (e.g., an electronic device 102 in FIG. 1 or an external electronic device 300 in FIG. 3) to operate based on a set condition. For example, the application of the electronic device 101 may be an IoT-based application (e.g., a Samsung^{™} SmartThings application) which controls and/or manages the external electronic device 300. Although FIG. 4 illustrates a case where the external electronic device 300 is a thread end device, the external electronic device 300 may also be a thread router or a thread border router.

An embodiment of the disclosure may provide an electronic device for managing thread networks based on a position and an operating method thereof.

An embodiment of the disclosure may provide an electronic device for managing thread networks so that a thread network-dividing operation or a thread network-merging operation is performed based on a position and an operating method thereof.

An embodiment of the disclosure may provide an electronic device for managing thread networks so that an operation channel is set based on a position and an operating method thereof.

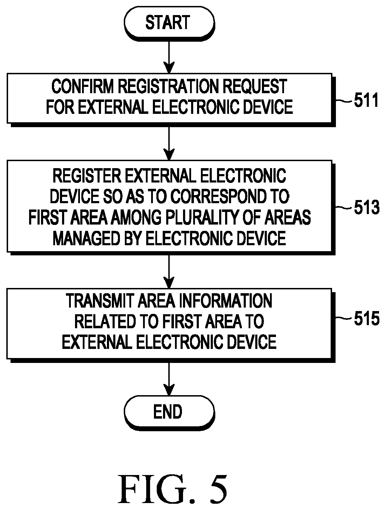

FIG. 5 is a flowchart schematically illustrating an example of an operating process of an electronic device according to an embodiment of the disclosure.

Referring to FIG. 5, in operation 511, at least one processor (e.g., a processor 120 in FIG. 1 or a processor 204 in FIG. 2) of an electronic device (e.g., a smart phone) (e.g., an electronic device 101 in FIG. 1 or FIG. 2) may identify a registration request for an external electronic device (e.g., an electronic device 102 in FIG. 1 or an external electronic device 300 in FIG. 3). The electronic device may provide a smart home service which is one of various services to which an IoT technology is applied, and in order to operate the external electronic device based on a set condition in various services provided in the smart home service, an application of the electronic device may need to support a function for controlling the external electronic device. For example, the application of the electronic device may be an IoT-based application (e.g., a Samsung^{™} SmartThings application) which controls and/or manages the external electronic device. The external electronic device may be registered via the IoT-based application in an Out-of-box scenario based on a user input, so the at least one processor may identify a registration request for the external electronic device based on the user input.

In operation 513, the at least one processor may register the external electronic device to correspond to a first area among a plurality of areas (e.g., spaces) managed by the electronic device based on the IoT-based application. In the electronic device, the plurality of regions may be set via the IoT-based application based on a user input, and unique position information (Position Info) may be assigned to each of the plurality of areas. In an embodiment, Position Info may be assigned to each of the plurality of areas, and the Position Info may include a position identifier (ID) and/or a position ID checker. In an embodiment, when a thread device is registered via the IoT-based application the Out-of-box scenario, the Position Info including the Position ID Checker and the Position ID may be assigned to the thread device based on the user input.

In an embodiment, the Position ID Checker may indicate whether a Thread Network Partition-dividing scheme based on a position is used. In an embodiment, the Position ID Checker may be first information indicating whether a Thread Network Partition is divided based on a position. In an embodiment, the Position ID Checker may be implemented with 1 bit. For example, if a value of the Position ID Checker is "1", it may indicate that the Thread Network Partition-dividing scheme based on the position is used, and if the value of the Position ID Checker is "0", it may indicate that the Thread Network Partition-dividing scheme based on the position is not used. In an embodiment, the Thread Network Partition may be a connected group of nodes which operate independently of arbitrary other nodes in a wireless communication network. Each Thread Network Partition may have a unique Leader, and if two or more Thread Network Partitions are included in the same thread network, the two or more Thread Network Partitions included in the same thread network may be connected via at least one thread link and merged into one Thread Network Partition. In an embodiment, the thread network may include one or more Thread Network Partitions which share a common network configuration including a thread network name and a network master key.

In an embodiment, the Position ID is an ID which uniquely identifies each of the plurality of areas and may indicate a position of each of the plurality of areas. In an embodiment, the Position ID may be second information which identifies a position of a corresponding area.

In an embodiment, the Position Info may be implemented in a type-length-value (TLV) format.

In an embodiment, the Position ID Checker and the Position ID are not assigned to each of the thread devices, but may be assigned per Thread Network Partition when a thread device establishes a connection and then generates a Thread Network Partition or successfully attaches to an already generated Thread Network Partition. However, when the thread device is registered via an IoT-based application in an Out-of-box scenario, a Position ID Checker set as a default value may be assigned to the thread device.

In an embodiment, the Position Info may be transmitted via a mesh link establishment (MLE) message.

In operation 515, the at least one processor may transmit area information related to the first area to the external electronic device via at least one communication circuit (e.g., a communication module 190 in FIG. 1 or a communication circuit 202 in FIG. 2). In an embodiment, the area information may include a Position ID Checker and a Position ID for the first area.

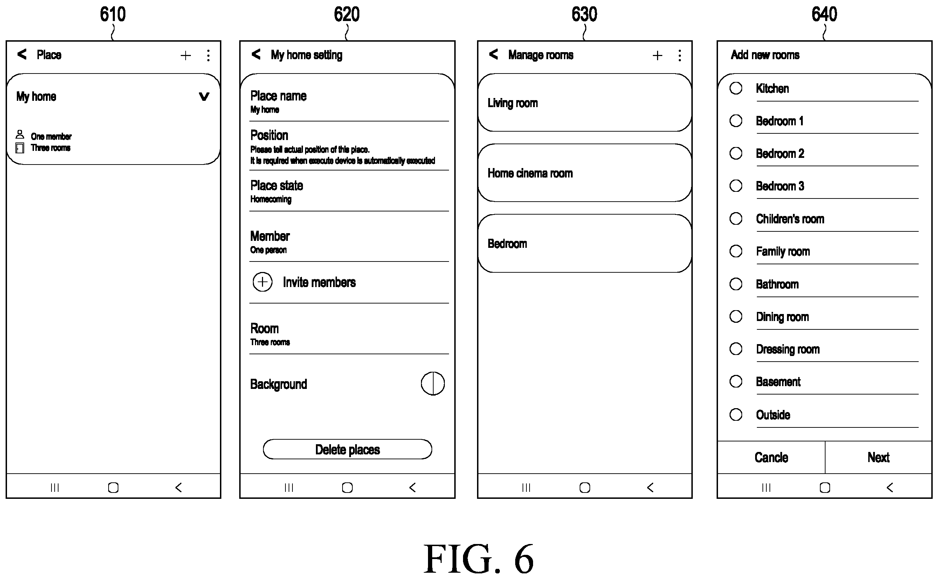

FIG. 6 is a diagram for explaining a screen displayed on an electronic device and Position Info assigned to each of a plurality of areas if the plurality of areas are registered in an IoT-based application according to an embodiment of the disclosure.

Referring to FIG. 6, among various services to which an IoT technology is applied, a smart home service may provide various IoT-based services. In the various services provided in the smart home service, in order to operate an external electronic device (e.g., an IoT device or a thread device) (e.g., an electronic device 102 in FIG. 1 or an external electronic device 300 in FIG. 3) based on a set condition, an application of an electronic device (e.g., a smart phone) (e.g., an electronic device 101 in FIG. 1 or FIG. 2) needs to support a function for controlling the external electronic device. For example, the application of the electronic device may be an IoT-based application (e.g., a Samsung^{™} SmartThings application) which controls and/or manages the external electronic device.

Based on a user input, the electronic device may set a plurality of areas (e.g., spaces) via the IoT-based application, and may assign unique Position Info to each of the plurality of areas.

FIG. 6 illustrates screens if a plurality of areas (e.g., rooms) are set in a wireless communication network (e.g., a place) in the IoT-based application. FIG. 6 illustrates screens 610 and 620 in which the place is set as "my house", a screen 630 in which the rooms are set as a "living room", a "home cinema room", and a "bedroom", and a screen 640 in which rooms (e.g., a kitchen, bedroom 1, bedroom 2, bedroom 3, a children's room, a family room, a bathroom, a dining room, a dressing room, a basement, and the outside) which may be newly added is provided in a list.

In an embodiment, Position Info may be assigned to each of the plurality of areas included in the wireless communication network, and the Position Info may include a Position ID and/or a Position ID Checker. In an embodiment, when a thread device is registered via the IoT-based application in an Out-of-box scenario, the Position Info including the Position ID Checker and the Position ID may be assigned to the thread device based on a user input.

In an embodiment, the Position ID Checker may indicate whether a Thread Network Partition-dividing scheme based on a position is used. In an embodiment, the Position ID Checker may be implemented with 1 bit. For example, if a value of the Position ID Checker is "1", it may indicate that the Thread Network Partition-dividing scheme based on the position is used, and if the value of the Position ID Checker is "0", it may indicate that the Thread Network Partition-dividing scheme based on the position is not used. In an embodiment, the Thread Network Partition may be a connected group of nodes which operate independently of arbitrary other nodes in a wireless communication network. Each Thread Network Partition may have a unique Leader, and if two or more Thread Network Partitions are included in the same thread network, the two or more Thread Network Partitions included in the same thread network may be connected via at least one thread link and merged into one Thread Network Partition. In an embodiment, the thread network may include one or more Thread Network Partitions which share a common network configuration including a thread network name and a network master key.

In an embodiment, the Position ID is an ID which uniquely identifies each of the plurality of areas and may indicate a position of each of the plurality of areas.

In an embodiment, the Position Info may be implemented in a type-length-value (TLV) format.

In an embodiment, the Position ID Checker and the Position ID are not assigned to each of the thread devices, but may be assigned per Thread Network Partition when a thread device establishes a connection and then generates a Thread Network Partition or successfully attaches to an already generated Thread Network Partition. However, when the thread device is registered via an IoT-based application in an Out-of-box scenario, a Position ID Checker set as a default value may be assigned to the thread device.

In an embodiment, the Position Info may be transmitted via a mesh link establishment (MLE) message. In an embodiment, the Position Info may be included in an Active Operational Dataset and a Pending Operational Dataset. The Active Operational Dataset includes parameters currently in use across the entire thread network, and the Pending Operational Dataset includes parameters scheduled to be used across the entire thread network.

In an embodiment, the Active Operational Dataset may be network operation information, and may include an active timestamp, a channel, a channel mask, an extended personal area networks (PAN) ID, a network master key, a network name, a PAN ID, a PSKc, and/or a security policy. In an embodiment, the Active Operational Dataset may further include the Position Info. The active timestamp, the channel, the channel mask, the extended PAN ID, the network master key, the network name, the PAN ID, the PSKc, and the security policy included in the Active Operational Dataset may be as shown in Table 1 below.

**[Table 1]**

| | |
|---|---|
| Active Timestamp | Time value used for priority comparison between Active Operational Datasets |
| Channel | PHY channel used for data transmissions |
| Channel Mask | A set of PHY channels used for scanning, network discovery, etc. |
| Extended PAN ID | Used to identify thread networks |
| Mesh-local Prefix | Used for a communication between thread devices within the same thread network |
| Network Master Key | Security key used to protect MAC and MLE messages |
| Network Name | User-readable string which identifies a thread network |
| PAN ID | MAC layer PAN ID used by Thread network for data transmissions |
| PSKc | Derived from a Commissioning Credential passphrase which a commissioner requires when connecting to and authenticating a thread network |
| Security Policy | Specifies network administrator setting for a security-related operation |

In an embodiment, the Pending Operational Dataset may be network operation information and may include all parameters included in the Active Operational Dataset. The Pending Operational Dataset may further include a delay timer and/or a pending timestamp. In an embodiment, the Pending Operational Dataset may further include the Position Info. The delay timer and the pending timestamp included in the Pending Operational Dataset may be as shown in Table 2 below.

**[Table 2]**

| | |
|---|---|
| Pending Timestamp | Time value used to compare priorities among other Pending Operational Datasets |
| Delay Timer | Timer which counts time maintained until a Pending Operational Dataset overwrites values which correspond to values in an Active Operational Dataset |

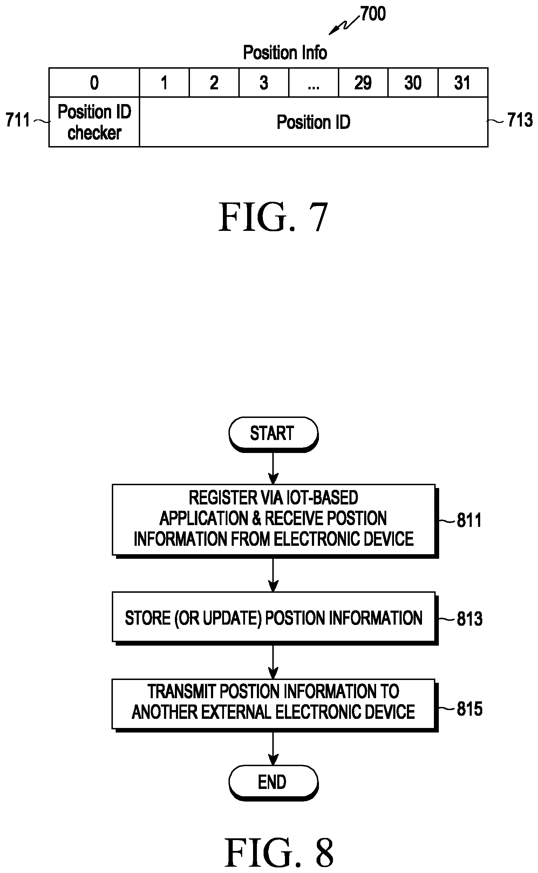

FIG. 7 is a diagram illustrating a format of Position Info according to an embodiment of the disclosure.

Referring to FIG. 7, Position Info 700 may include a Position ID 711 and a Position ID Checker 713. The Position Info 700 may be implemented in a TLV format and may be implemented in, for example, 32 bits.

In an embodiment, the Position ID 711 may indicate a position of a corresponding area. The Position ID 711 may be an ID which uniquely identifies the corresponding area (e.g., an area where an external electronic device is registered). In an embodiment, the Position ID may be implemented with, for example, a maximum of 31 bits. In FIG. 7, a case where the Position ID is implemented with the maximum of 31 bits is illustrated as an example, but in the following description, a case where the Position ID is implemented with 7 bits will be described as another example.

In an embodiment, the Position ID Checker 713 may indicate whether a Thread Network Partition-dividing scheme based on a position is used. In an embodiment, the Position ID Checker may be implemented with 1 bit. For example, if a value of the Position ID Checker is "1", it may indicate that the Thread Network Partition-dividing scheme based on the position is used, and if the value of the Position ID Checker is "0", it may indicate that the Thread Network Partition-dividing scheme based on the position is not used.

FIG. 8 is a flowchart illustrating an operating process of an external electronic device according to an embodiment of the disclosure.

Referring to FIG. 8, an external electronic device (e.g., an electronic device 102 in FIG. 1 or an external electronic device 300 in FIG. 3) may be registered in an electronic device (e.g., an electronic device 101 in FIG. 1 or FIG. 2) via an IoT-based application (e.g., a Samsung^{™} SmartThings application) in an Out-of-box scenario. As the external electronic device is registered in the IoT-based application of the electronic device, at least one processor (e.g., a processor 304 in FIG. 3) of the external electronic device may receive Position Info from the electronic device via at least one communication circuit (e.g., a communication circuit 302 in FIG. 3) in operation 811. In an embodiment, the external electronic device may be a thread device operating as a Leader. Hereinafter, for a convenience of description, the thread device operating as the Leader will be referred to as a "Leader thread device." The Position Info may be implemented to be similar to or substantially the same as that described in FIG. 6 or FIG. 7, so a detailed description thereof will be omitted.

Alternatively, if the Position Info for a specific area is changed, the electronic device may transmit the Position Info to the external electronic device, and this case may also correspond to operation 811. Since the Position Info includes a Position ID and a Position ID Checker, the Position Info may be changed if at least one of the Position ID and the Position ID Checker is changed. For example, the Position ID for the specific area may be maintained as it is, while only a value of the Position ID Checker may be changed, or the Position ID for the specific area may be changed and the value of the Position ID Checker may be maintained, or both the Position ID and the value of the Position ID Checker for the specific area may be changed.

In operation 813, the processor may store (or update) the Position Info received from the electronic device in memory (e.g., memory 306 in FIG. 3). In an embodiment, the processor may include the Position Info in an Active Operational Dataset and a Pending Operational Dataset stored in the memory.

In operation 815, the processor may transmit the Position Info to another external electronic device included in a Thread Network Partition in which the external electronic device operates as the Leader thread device via the at least one communication circuit. In an embodiment, another thread device which does not operate as the Leader thread device among thread devices included in the Thread Network Partition may be a node thread device, and the node thread device may be the other external electronic device. In this way, as the external electronic device transmits the Position Info to the node thread device, the node thread device may also store (or update) the Position Info in an Active Operational Dataset and a Pending Operational Dataset which the node thread device stores.

In an embodiment, the Position Info may be transmitted via an MLE message, and a command type of the MLE message including the Position Info may be set to "Announce". The MLE message with the command type set to the "Announce" may be a multicast message used to notify current operating parameters of the thread network to the node thread device within the Thread Network Partition. In an embodiment, the Position Info may be included in the Active Operational Dataset and the Pending Operational Dataset, and the Active Operational Dataset and the Pending Operational Dataset including the Position Info may be transmitted via the MLE message.

In FIG. 8, the case where the external electronic device operates as the Leader thread device has been described, but if the external electronic device operates as the node thread device, operation 815 may be omitted.

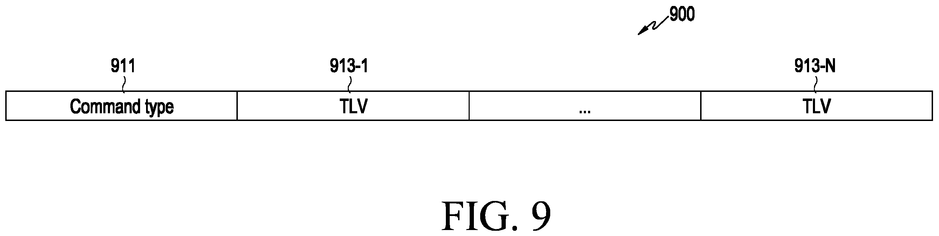

FIG. 9 is a diagram illustrating a format of an MLE message in which Position Info is included according to an embodiment of the disclosure.

Referring to FIG. 9, an MLE message 900 may include a command type field 911 and TLV fields 913-1, ... , 913-N.

In an embodiment, the command type field 911 may be used to identify a type of the MLE message 900. The command type field 911 may be implemented with, for example, 8 bits. When the MLE message 900 is used by a Leader thread device to transmit Position Info, the field value of the command type field 911 may be set to, for example, 15, and the field value 15 may indicate that the command type of the MLE message 900 is "Announce". The Position Info may be included in any one of the TLV fields 913-1, ... , 913-N. The Position Info may include a Position ID Checker and a Position ID, and the Position Info may be implemented to be similar to or substantially the same as that described in FIG. 6 or FIG. 7, so a detailed description thereof will be omitted.

Additionally, an Active Operational Dataset and a Pending Operational Dataset may be included in any one of the TLV fields 913-1, ... , 913-N. Parameters included in the Active Operational Dataset and the Pending Operational Dataset may be classified into network management TLVs. The network management TLVs may be represented as shown in Table 3 below.

**[Table 3]**

| | | | |
|---|---|---|---|
| Channel TLV | Network Mesh-Local Prefix TLV | Extended PAN ID TLV | Steering Data TLV |
| PSKc TLV | Network Key Sequence Counter TLV | Network Name TLV | Active Timestamp TLV |
| Channel Mask TLV | Border Agent Locator TLV | Commissioner ID TLV | Network Master Key TLV |
| PAN ID TLV | Commissioner UDP Port TLV | Security Policy TLV | Pending Timestamp TLV |
| Delay Timer TLV | Commissioner Session ID TLV | | |

The Active Operational Dataset and the Pending Operational Dataset may be implemented to be similar to or substantially the same as those described in FIG. 6, so a detailed description thereof will be omitted.

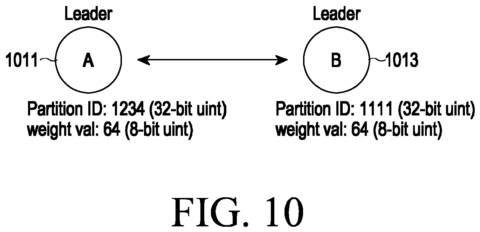

FIG. 10 is a diagram for explaining a Thread Network Partition-merging operation according to an embodiment of the disclosure.

Referring to FIG. 10, it will be assumed that there are two Leader thread devices (e.g., a first Leader thread device 1011 and a second Leader thread device 1013) in a wireless communication network.

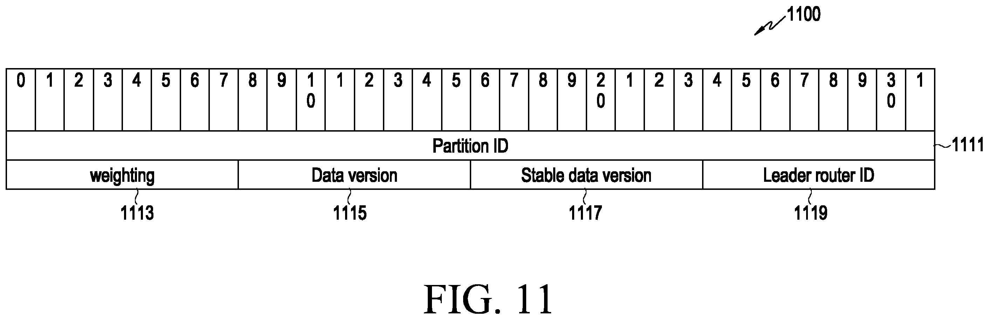

The first Leader thread device 1011 may be a Leader thread device with a partition ID of 1234 and a weight value (e.g., weighting 1113 in FIG. 11) of 64, and the second Leader thread device 1013 may be a Leader thread device with a partition ID of 1111 and a weight value of 64.

In a Thread technology, Thread Network Partitions are basically merged, so each of the first Leader thread device 1011 and the second Leader thread device 1013 may identify whether to merge a Thread Network Partition managed by the first Leader thread device 1011 and a Thread Network Partition managed by the second Leader thread device 1013 based on Position Info.

If each of the first Leader thread device 1011 and the second Leader thread device 1013 identifies to merge the Thread Network Partition managed by the first Leader thread device 1011 and the Thread Network Partition managed by the second Leader thread device 1013, the first Leader thread device 1011 and the second Leader thread device 1013 compare Leader data with each other, and based on a comparison result, the Thread Network Partition managed by the first Leader thread device 1011 and the Thread Network Partition managed by the second Leader thread device 1013 may be merged.

FIG. 11 is a diagram illustrating a format of a Leader data TLV in which Leader data is included according to an embodiment of the disclosure.

Referring to FIG. 11, a Leader data TLV 1100 may include a Partition ID 1111, a weighting 1113, a data version 1115, a stable data version 1117, and a Leader router ID 1119. In an embodiment, the Leader data TLV 1100 may be transmitted via an MLE message (e.g., an MLE Advertisement message).

In an embodiment, the Partition ID 1111 may be an ID which identifies a Thread Network Partition to which a thread device transmitting the Leader data TLV 1100 belongs. For example, the Partition ID 1111 may be implemented with 32 bits.

In an embodiment, a Weighting 1113 may be a weight value of a Thread Network Partition to which a thread device transmitting the Leader data TLV 1100 belongs. For example, the Weighting 1113 may be implemented with 8 bits.

In an embodiment, a Data Version 1115 may be a VN_version value of the thread device transmitting the Leader data TLV 1100.

In an embodiment, a Stable Data Version 1117 may be a VN_stable_version value of the thread device transmitting the Leader data TLV 1100.

In an embodiment, a Leader Router ID 1119 may be a router ID assigned to a leader thread device to which the thread device transmitting the Leader data TLV 1100 belongs.

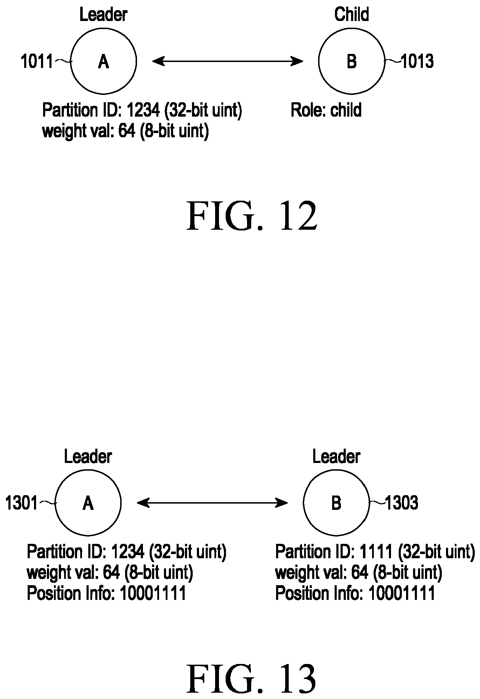

FIG. 12 is a diagram for explaining a Thread Network Partition-merging operation according to an embodiment of the disclosure.

Referring to FIG. 12, as described in FIG. 10, if a first Leader thread device 1011 with a Partition ID of 1234 and a weight value of 64 and a second Leader thread device 1013 with a Partition ID of 1111 and a weight value of 64 exist in a wireless communication network, each of the first Leader thread device 1011 and the second Leader thread device 1013 may identify whether to merge a Thread Network Partition managed by the first Leader thread device 1011 and a Thread Network Partition managed by the second Leader thread device 1013 based on Position Info.

If each of the first Leader thread device 1011 and the second Leader thread device 1013 identifies to merge the Thread Network Partition managed by the first Leader thread device 1011 and the Thread Network Partition managed by the second Leader thread device 1013, the first Leader thread device 1011 and the second Leader thread device 1013 compare Leader data with each other, and based on a comparison result, the Thread Network Partition managed by the first Leader thread device 1011 and the Thread Network Partition managed by the second Leader thread device 1013 may be merged.

FIG. 12 illustrates a case where the Thread Network Partition managed by a first Leader thread device 1011 and the Thread Network Partition managed by a second Leader thread device 1013 are merged in a form in which the Thread Network Partition managed by the second Leader Thread Device 1013 is included in the Thread Network Partition managed by the first Leader Thread Device 1011. In FIG. 12, the Partition ID of the first Leader thread device 1011 is larger than the Partition ID of the second Leader thread device 1013, so the Thread Network Partition managed by the first Leader thread device 1011 and the Thread Network Partition managed by the second Leader thread device 1013 may be merged in the form in which the Thread Network Partition managed by the second Leader thread device 1013 is included in the Thread Network Partition managed by the first Leader thread device 1011. In this case, a role of the second Leader thread device 1013 may be changed to a child.

A description of a Thread Network Partition-merging rule according to an embodiment of the disclosure may be as follows.

### <Rule 1>

A first Leader thread device which determines whether to perform a Thread Network Partition-merging operation by applying a Thread Network Partition-merging rule may identify whether a value of a Position ID Checker of the first Leader thread device is a first value (e.g., "1"). As described in FIGS. 6 and 7, if the value of the Position ID Checker is "1", it may indicate that a Thread Network Partition-dividing scheme based on a position is used, and if the value of the Position ID Checker is "0", it may indicate that the Thread Network Partition-dividing scheme based on the position is not used. As an identification result, if the value of the Position ID Checker of the first Leader thread device is not the first value (e.g., if the value of the Position ID Checker of the first Leader thread device is a second value (e.g., "0")), the first Leader thread device may determine not to perform a Thread Network Partition-merging scheme based on a position.

As an identification result, if the value of the Position ID Checker of the first Leader thread device is the first value, the first Leader thread device may determine to perform the Thread Network Partition-merging operation based on the position. The first Leader thread device may compare the Position ID of the first Leader thread device with a Position ID of a second Leader thread device which is a Leader thread device of a second Thread Network Partition which is a target to be merged with a first Thread Network Partition to which the first Leader thread device belongs. As a comparison result, if the Position ID of the first Leader thread device and the Position ID of the second Leader thread device are not the same, the first Leader thread device may determine not to perform the Thread Network Partition-merging operation.

As the comparison result, if the Position ID of the first Leader thread device and the Position ID of the second Leader thread device are the same, the first Leader thread device may further consider rule 2.

### <Rule 2>

A non-singleton Thread Network Partition may always have a higher priority than a singleton Thread Network Partition. In an embodiment, the singleton Thread Network Partition and the non-singleton Thread Network Partition may be merged in a form in which the singleton Thread Network Partition is included in the non-singleton Thread Network Partition.

### <Rule 3>

Between two singleton Thread Network Partitions or between two non-singleton Thread Network Partitions, a Thread Network Partition with a larger weight value may always have a higher priority.

### <Rule 4>

Between two singleton Thread Network Partitions with the same weight value or between two non-singleton Thread Network Partitions with the same weight value, a Thread Network Partition with a larger Partition ID may always have a higher priority.

FIG. 13 is a diagram for explaining a Thread Network Partition-merging operation according to an embodiment of the disclosure.

Referring to FIG. 13, it will be assumed that there are two Leader thread devices (e.g., a first Leader thread device 1301 and a second Leader thread device 1303) in a wireless communication network.

The first Leader thread device 1301 may be a Leader thread device with a partition ID of 1234, a weight value of 64, and a Position Info of 10001111 (e.g., with a value of a Position ID Checker of 1 and a Position ID of 0001111). The second Leader thread device 1303 may be a Leader thread device with a partition ID of 1111, a weight value of 64, and Position Info of 10001111 (e.g., with a value of a Position ID Checker of 1 and a Position ID of 0001111).

In a Thread technology, Thread Network Partitions are basically merged, so each of the first Leader thread device 1301 and the second Leader thread device 1303 may identify whether to merge a Thread Network Partition managed by the first Leader thread device 1301 and a Thread Network Partition managed by the second Leader thread device 1303 based on a Thread Network Partition-merging rule.

Since the value of the Position ID Checker is set to 1, the first Leader thread device 1301 may identify that a Thread Network Partition-dividing scheme based on a position is used, and therefore, may identify that a Thread Network Partition managed by the first Leader thread device 1301 and a Thread Network Partition managed by the second Leader thread device 1303 need to be merged.

Since the value of the Position ID Checker is set to 1, the second Leader thread device 1303 may identify that the Thread Network Partition-dividing scheme based on the position is used, and therefore, may identify that the Thread Network Partition managed by the second Leader thread device 1303 and the Thread Network Partition managed by the first Leader thread device 1301 need to be merged.

If each of the first Leader thread device 1301 and the second Leader thread device 1303 identifies to merge the Thread Network Partition managed by the first Leader thread device 1301 and the Thread Network Partition managed by the second Leader thread device 1303, the Thread Network Partition managed by the first Leader thread device 1301 and the Thread Network Partition managed by the second Leader thread device 1303 may be merged based on the Thread Network Partition-merging rule.

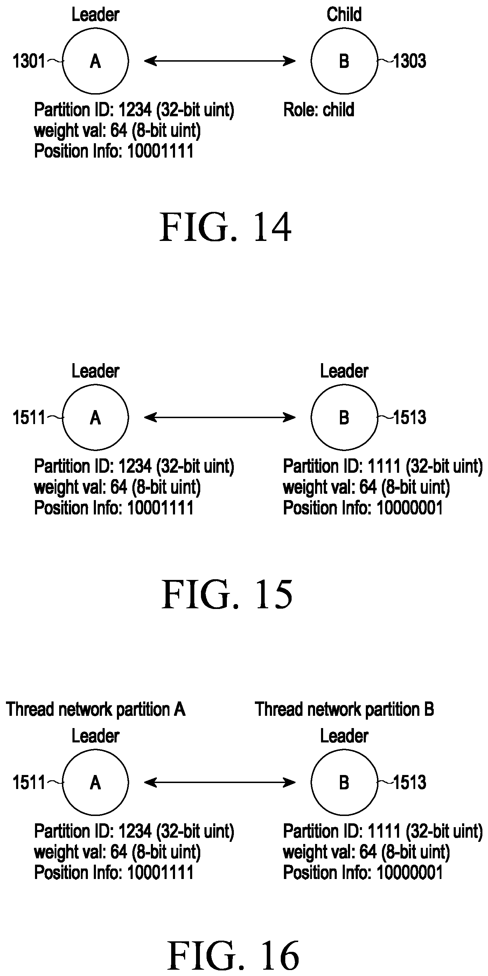

FIG. 14 is a diagram for explaining a Thread Network Partition-merging operation according to an embodiment of the disclosure.

Referring to FIG. 14, as described in FIG. 13, if a first Leader thread device 1301 with a Partition ID of 1234, a weight value of 64, and Position Info of 10001111 (for example, with a value of a Position ID of 1, and a Position ID of 0001111) and a second Leader thread device 1303 with a Partition ID of 1111, a weight value of 64, and Position Info of 10001111 (for example, a value of a Position ID Checker of 1, and a Position ID of 0001111) exist in a wireless communication network, each of the first Leader thread device 1301 and the second Leader thread device 1303 may identify whether to merge a Thread Network Partition managed by the first Leader thread device 1301 and a Thread Network Partition managed by the second Leader thread device 1303 based on the Position Info.

Since the value of the Position ID Checker is set to 1, each of the first Leader thread device 1301 and the second Leader thread device 1303 may identify that the Thread Network Partition managed by the first Leader thread device 1301 and the Thread Network Partition managed by the second Leader thread device 1303 need to be merged based on a position. According to rule 1 in a Thread Network Partition-merging rule, the first Leader thread device 1301 and the second Leader thread device 1303 may compare the Position IDs with each other.

As a comparison result, the first Leader thread device 1301 and the second Leader thread device 1303 may identify that they have the same Position ID, and therefore may further consider rule 2 in the Thread Network Partition-merging rule.

In FIG. 14, it will be assumed that each of a Thread Network Partition to which the first Leader thread device 1301 belongs and a Thread Network Partition to which the second Leader thread device 1303 belongs is a singleton-Thread Network Partition. The rule 2 is a rule that a non-singleton Thread Network Partition may always have a higher priority than a singleton Thread Network Partition, so the Thread Network Partition to which the first Leader thread device 1301 belongs and the Thread Network Partition to which the second Leader thread device 1303 belongs may have the same priority. So, the first Leader thread device 1301 and the second Leader thread device 1303 may further consider rule 3 in the Thread Network Partition-merging rule.

The rule 3 is a rule that a Thread Network Partition with a larger weight value may always have a higher priority between two singleton Thread Network Partitions or between two non-singleton Thread Network Partitions, and the Thread Network Partition to which the first Leader thread device 1301 belongs and the Thread Network Partition to which the second Leader thread device 1303 belongs which have the same weight value (e.g., 64) may have the same priority. Therefore, the first Leader thread device 1301 and the second Leader thread device 1303 may further consider rule 4 in the Thread Network Partition-merging rule.

The rule 4 may be a rule that a Thread Network Partition with a larger Partition ID may always have a higher priority between two singleton Thread Network Partitions having the same weight value or between two non-singleton Thread Network Partitions having the same weight value. Since the Partition ID (e.g., 1234) of the first Leader thread device 1301 is larger than the Partition ID (e.g., 1111) of the second Leader thread device 1303, the Thread Network Partition managed by the first Leader thread device 1301 and the Thread Network Partition managed by the second Leader thread device 1303 may be merged in a form in which the Thread Network Partition managed by the second Leader thread device 1303 is included in the Thread Network Partition managed by the first Leader thread device 1301. In this case, a role of the second Leader thread device 1303 may be changed to a Child.

FIG. 15 is a diagram for explaining a Thread Network Partition-merging operation according to an embodiment of the disclosure.

Referring to FIG. 15, it will be assumed that there are two Leader thread devices (e.g., a first Leader thread device 1501 and a second Leader thread device 1503) in a wireless communication network.

The first Leader thread device 1511 may be a Leader thread device with a partition ID of 1234, a weight value of 64, and a Position Info of 10001111 (e.g., with a value of a Position ID Checker of 1 and a Position ID of 0001111).

The second Leader thread device 1513 may be a Leader thread device with a partition ID of 1111, a weight value of 64, and Position Info of 10000001 (e.g., with a value of a Position ID Checker of 1 and a Position ID of 0000001).

In a Thread technology, Thread Network Partitions are basically merged, so each of the first Leader thread device 1511 and the second Leader thread device 1513 may identify whether to merge a Thread Network Partition managed by the first Leader thread device 1511 and a Thread Network Partition managed by the second Leader thread device 1513 based on a Thread Network Partition-merging rule.

Since the value of the Position ID Checker is set to 1, the first Leader thread device 1511 may identify that a Thread Network Partition-dividing scheme based on a position is used, and therefore, may identify that a Thread Network Partition managed by the first Leader thread device 1511 and a Thread Network Partition managed by the second Leader thread device 1513 need to be merged based on a position.

Since the value of the Position ID Checker is set to 1, the second Leader thread device 1513 may identify that the Thread Network Partition-dividing scheme based on the position is used, and therefore, may identify that the Thread Network Partition managed by the second Leader thread device 1513 and the Thread Network Partition managed by the first Leader thread device 1511 need to be merged based on a position.

If each of the first Leader thread device 1511 and the second Leader thread device 1513 identifies that the Thread Network Partition managed by the first Leader thread device 1511 and the Thread Network Partition managed by the second Leader thread device 1513 need to be merged based on the position, a merging operation for the Thread Network Partition managed by the first Leader thread device 1511 and the Thread Network Partition managed by the second Leader thread device 15133 may be performed based on the Thread Network Partition-merging rule.

FIG. 16 is a diagram for explaining a Thread Network Partition-merging operation according to an embodiment of the disclosure.

Referring to FIG. 16, as described in FIG. 15, if a first Leader thread device 1511 with a Partition ID of 1234, a weight value of 64, and Position Info of 10001111 (for example, with a value of a Position ID of 1, and a Position ID of 0001111) and a second Leader thread device 1513 with a Partition ID of 1111, a weight value of 64, and Position Info of 10000001 (for example, a value of a Position ID Checker of 1, and a Position ID of 10000001) exist in a wireless communication network, each of the first Leader thread device 1511 and the second Leader thread device 1513 may identify whether to merge a Thread Network Partition managed by the first Leader thread device 1511 and a Thread Network Partition managed by the second Leader thread device 1513 based on the Position Info.

Since the value of the Position ID Checker is set to 1, each of the first Leader thread device 1511 and the second Leader thread device 1513 may identify that the Thread Network Partition managed by the first Leader thread device 1511 and the Thread Network Partition managed by the second Leader thread device 1513 need to be merged based on a position. According to rule 1 in a Thread Network Partition-merging rule, the first Leader thread device 1511 and the second Leader thread device 1513 may compare the Position IDs with each other. Since the Position ID of the first Leader thread device 1511 and the Position ID of the second Leader thread device 1513 are different, a Thread Network Partition-merging operation may not be performed based on the rule 1 in the Thread Network Partition-merging rule.

In FIG. 16, it will be assumed that a Thread Network Partition to which the first Leader thread device 1511 belongs is a Thread Network Partition A, and a Thread Network Partition to which the second Leader thread device 1513 belongs is a Thread Network Partition B. Based on the rule 1 in the Thread Network Partition-merging rule, the Thread Network Partition-merging operation is not performed, so the Thread Network Partition A and the Thread Network Partition B may not be merged.

According to an embodiment, an operation for a new thread device to attach to a thread network may also be performed based on a Thread Network Partition-merging rule, similar to a Thread Network Partition-merging operation, and this may be described as follows.

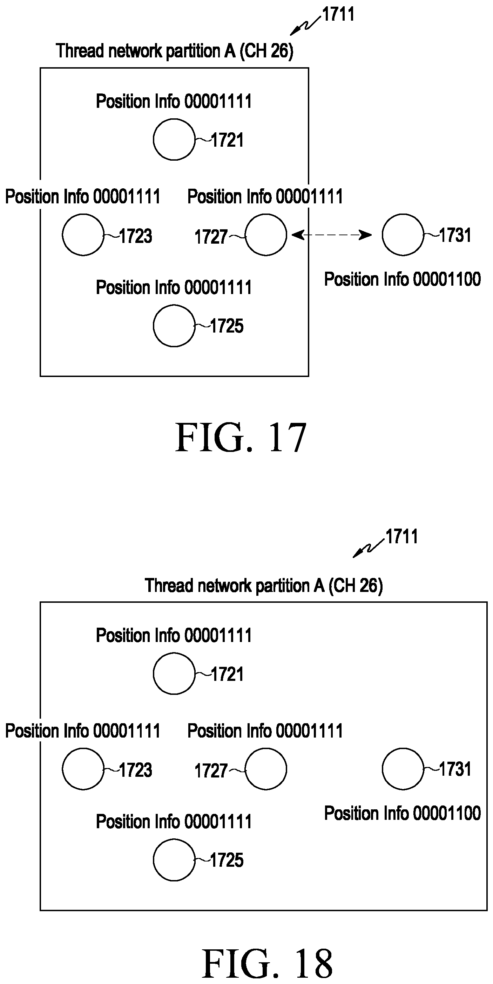

FIG. 17 is a diagram for explaining an attaching operation to a thread network according to an embodiment of the disclosure.

Referring to FIG. 17, there may be a Thread Network Partition A 1711 which is a thread network using a channel 26 (CH 26) as an operation channel in a wireless communication network. Thread Network Partition A 1711 includes a total of four thread devices 1721, 1723, 1725, and 1727. The Thread devices 1721, 1723, 1725, and 1727 may have the same Position Info (e.g., 00001111).

While the Thread Network Partition A 1711 exists, a thread device 1731 which is a new thread device may perform an attaching operation to a Thread Network (e.g., the Thread Network Partition A 1711). For example, in an IoT-based application (e.g., a Samsung^{™} SmartThings application), if a Thread Network Partition is not divided based on Position Info, but it is intended for the thread device 1731 to be installed in a new area (e.g., a space) and then be included in an already generated Thread Network Partition, an electronic device (e.g., an electronic device 101 in FIG. 1 or 2) may transmit a Position ID Checker set to a value of "0" to a Leader thread device of the Thread Network Partition A 1711 based on a user input. The Leader thread device of the Thread Network Partition A 1711 may transmit the Position ID Checker received from the electronic device via an MLE message.

Node thread devices of the Thread Network Partition A 1711 may receive the Position ID Checker set to the value of "0" from the Leader thread device of the Thread Network Partition A 1711.

FIG. 18 is a diagram for explaining an attaching operation to a thread network according to an embodiment of the disclosure.

Referring to FIG. 18, as described in FIG. 17, there may be a Thread Network Partition A 1711 which is a Thread Network Partition using a channel 26 as an operation channel in a wireless communication network. The Thread Network Partition A 1711 includes a total of four thread devices 1721, 1723, 1725, and 1727. The Thread devices 1721, 1723, 1725, and 1727 may have the same Position Info (e.g., 00001111).

While the Thread Network Partition A 1711 exists, a thread device 1731 which is a new thread device may perform an attaching operation to a thread network (e.g., the Thread Network Partition A 1711). The thread device 1731 may perform a discovery operation and discover the Thread Network Partition A 1711. A value (e.g., 00001100) (e.g., a value of a Position ID Checker is "0" and a Position ID is "0001100") of Position Info of the thread device 1731 may be different from a value (e.g., 00001111) (e.g., the value of the Position ID Checker is "0" and the Position ID is "0001111") of Position Info of the node thread devices of the Thread Network Partition A 1711. Since the Thread Network Partition-dividing scheme based on a position is not used in the Thread Network Partition A 1711 (for example, since the value of the Position ID Checker is "0"), the thread device 1731 may attach to the Thread Network Partition A 1711 regardless of the Position ID. So, the thread device 1731 which is a thread device with the Position ID different from the Position ID of the thread devices 1721, 1723, 1725, and 1727 may be included in the Thread Network Partition A 1711 together with the thread devices 1721, 1723, 1725, and 1727.

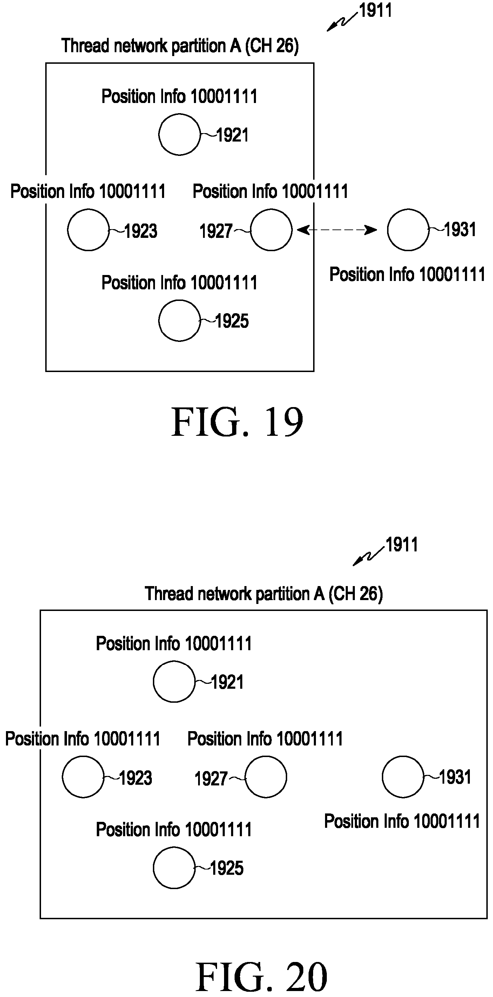

FIG. 19 is a diagram for explaining an attaching operation to a thread network according to an embodiment of the disclosure.

Referring to FIG. 19, there may be a Thread Network Partition A 1911 which is a Thread Network Partition using a channel 26 (CH 26) as an operation channel in a wireless communication network. The Thread Network Partition A 1911 includes a total of four thread devices 1921, 1923, 1925, and 1927. The Thread devices 1921, 1923, 1925, and 1927 may have the same Position Info (e.g., 00001111) (for example, a value of a Position ID Checker is "0" and a Position ID is "0001111").

While the Thread Network Partition A 1911 exists, a thread device 1931 which is a new thread device may perform an attaching operation to a thread network (e.g., the Thread Network Partition A 1911). For example, in an IoT-based application (e.g., a Samsung^{™} SmartThings application), if a Thread Network Partition is divided based on a position, and it is intended for the thread device 1931 to be installed in the same area (e.g., a space) and then be included in an already generated Thread Network Partition, an electronic device (e.g., an electronic device 101 in FIG. 1 or 2) may transmit a Position ID Checker set to a value of "1" to a Leader thread device of the Thread Network Partition A 1911 based on a user input. The Leader thread device of the Thread Network Partition A 1911 may transmit the Position ID Checker received from the electronic device via an MLE message (e.g., an MLE Advertisement message). Node thread devices of the Thread Network Partition A 1911 may receive the Position ID Checker set to the value of "1" from the Leader thread device of the Thread Network Partition A 1911. As each of the node thread devices 1921, 1923, 1925, and 1927 of the Thread Network Partition A 1911 receives the Position ID Checker set to the value of "1" from the Leader thread device, its Position Info may be "10001111".

FIG. 20 is a diagram for explaining an attaching operation to a thread network according to an embodiment of the disclosure.

Referring to FIG. 20, as described in FIG. 19, there may be a Thread Network Partition A 1911 which is a Thread Network Partition using a channel 26 as an operation channel in a thread network. The Thread Network Partition A 1911 includes a total of four thread devices 1921, 1923, 1925, and 1927. The Thread devices 1921, 1923, 1925, and 1927 may have the same Position Info (e.g., 10001111) (for example, a value of a Position ID Checker is "1", and a Position ID is "0001111 ").

While the Thread Network Partition A 1911 exists, a thread device 1931 which is a new thread device may perform an attaching operation to a thread network (e.g., the Thread Network Partition A 1911). The thread device 1931 may perform a discovery operation and discover the Thread Network Partition A 1911. A value (e.g., 10001111) of Position Info of the thread device 1931 may be the same as a value (e.g., 10001111) of Position Info of the node thread devices of the Thread Network Partition A 1911. Since the Thread Network Partition-dividing scheme based on a position is used in the Thread Network Partition A 1911 (for example, since the value of the Position ID Checker is "1"), the thread device 1931 with the same Position ID as the Thread Network Partition A 1911 may attach to the Thread Network Partition A 1911. So, the thread device 1931 which is a thread device with the same Position ID as the Position ID of the thread devices 1921, 1923, 1925, and 1927 may be included in the Thread Network Partition A 1911 together with the thread devices 1921, 1923, 1925, and 1927.

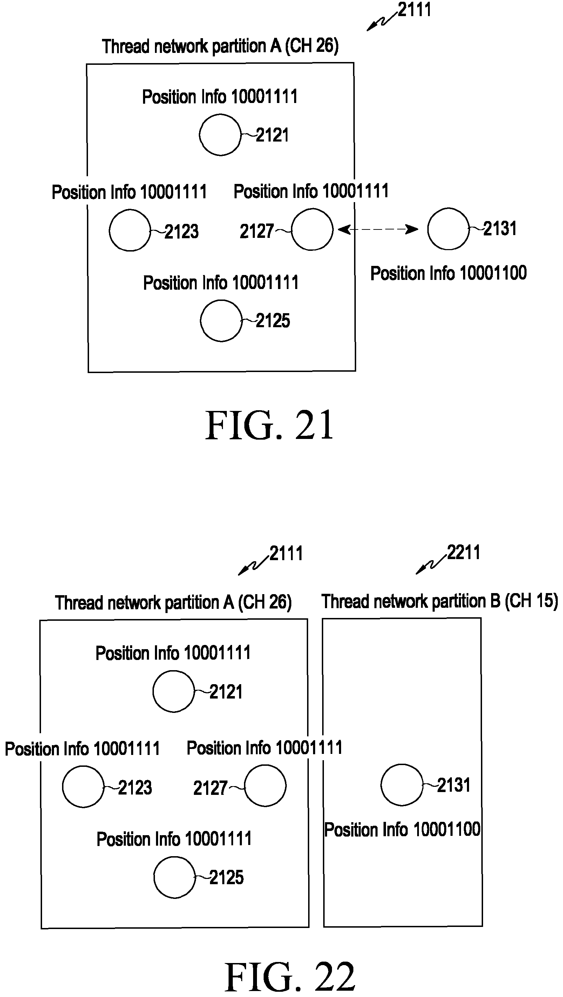

FIG. 21 is a diagram for explaining an attaching operation to a thread network according to an embodiment of the disclosure.

Referring to FIG. 21, there may be a Thread Network Partition A 2111 which is a Thread Network Partition using a channel 26 (CH 26) as an operation channel in a wireless communication network. The Thread Network Partition A 2111 includes a total of four thread devices 2121, 2123, 2125, and 2127. The Thread devices 2121, 2123, 2125, and 2127 may have the same Position Info (e.g., 00001111) (for example, a value of a Position ID Checker is "0" and a Position ID is "0001111").

While the Thread Network Partition A 2111 exists, a thread device 2131 which is a new thread device may perform an attaching operation to a thread network (e.g., a Thread Network Partition). For example, in an IoT-based application (e.g., a Samsung^{™} SmartThings application), if a Thread Network Partition is divided based on position information, and it is intended for the thread device 2131 to be installed in a new area (e.g., a space) and then be included in a separate Thread Network Partition from an already generated Thread Network Partition, an electronic device (e.g., an electronic device 101 in FIG. 1 or 2) may transmit a Position ID Checker set to a value of "1" to a Leader thread device of the Thread Network Partition A 2111 based on a user input. The Leader thread device of the Thread Network Partition A 2111 may transmit the Position ID Checker received from the electronic device via an MLE message (e.g., an MLE Advertisement message). Node thread devices of the Thread Network Partition A 2111 may receive the Position ID Checker set to the value of "1" from the Leader thread device of the Thread Network Partition A 2111. As each of the node thread devices 2121, 2123, 2125, and 2127 of the Thread Network Partition A 2111 receives the Position ID Checker set to the value of "1" from the Leader thread device, its Position Info may be "10001111".

FIG. 22 is a diagram for explaining an attaching operation to a thread network according to an embodiment of the disclosure.

Referring to FIG. 22, as described in FIG. 21, there may be a Thread Network Partition A 2111 which is a Thread Network Partition using a channel 26 as an operation channel in a thread network. The Thread Network Partition A 2111 includes a total of four thread devices 2121, 2123, 2125, and 2127. The Thread devices 2121, 2123, 2125, and 2127 may have the same Position Info (e.g., 10001111) (for example, a value of a Position ID Checker is "1", and a Position ID is "0001111 ").

While the Thread Network Partition A 2111 exists, a thread device 2131 which is a new thread device may perform an attaching operation to a thread network (e.g., a Thread Network Partition). The thread device 2131 may perform a discovery operation and discover the Thread Network Partition A 2111. A value (e.g., 10001100) of Position Info of the thread device 2131 may be different from a value (e.g., 10001111) of Position Info of the node thread devices of the Thread Network Partition A 2111. Since the Thread Network Partition-dividing scheme based on a position is used in the Thread Network Partition A 2111 (for example, since the value of the Position ID Checker is "1"), the thread device 2131 with a different Position ID from the Thread Network Partition A 2111 may not attach to the Thread Network Partition A 2111 (for example, a Thread Network Partition to which the thread device 2131 with the different Position ID from the Thread Network Partition A 2111 belongs may be different from the Thread Network Partition A 2111).

So, the thread device 2131 which is a thread device with the Position ID different from the Position ID of the thread devices 2121, 2123, 2125, and 2127 may not be included in the Thread Network Partition A 2111, and a Thread Network Partition B 2211 which is a new Thread Network Partition may be generated. In this case, the thread device 2131 may be a Leader thread device of the Thread Network Partition B 2211, and the Thread Network Partition B 2211 may use a Channel 15 (CH 15) different from the operation channel of the Thread Network Partition A 2111.

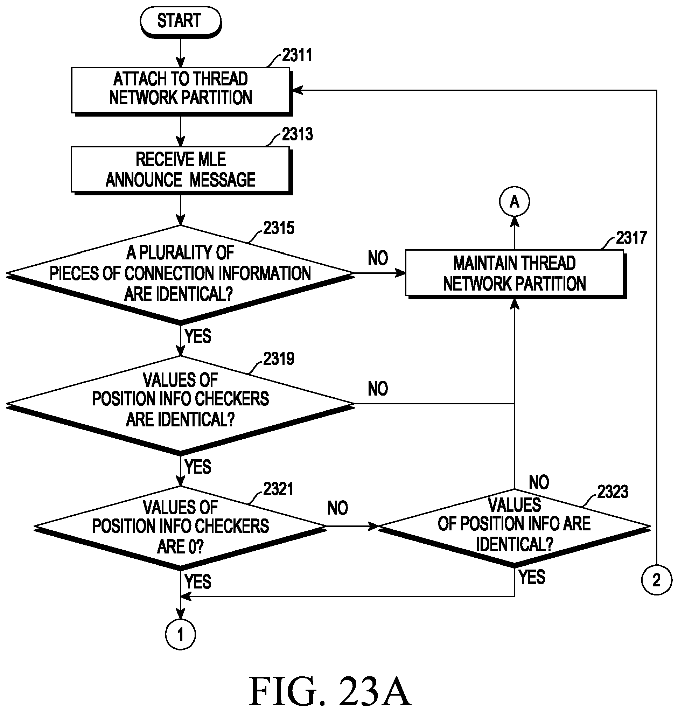

FIG. 23a is a flowchart illustrating an operating process of an external electronic device according to an embodiment of the disclosure.

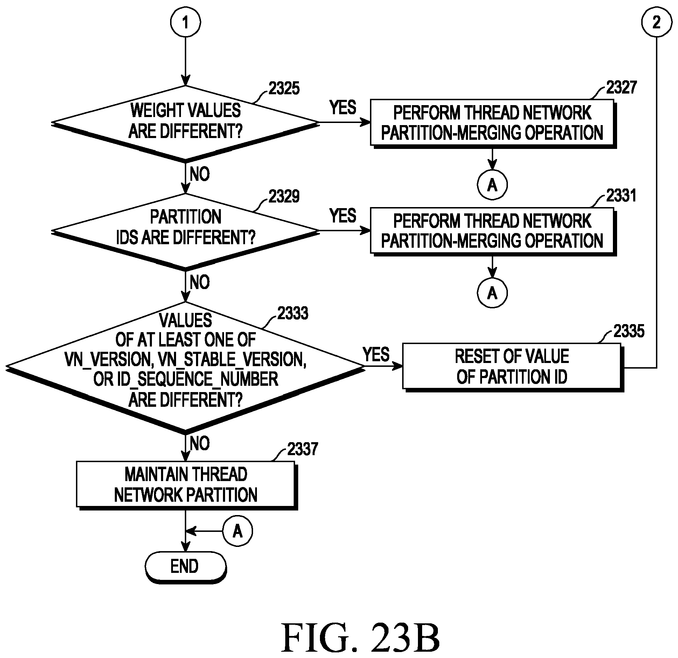

FIG. 23b is a flowchart illustrating an operating process of an external electronic device according to an embodiment of the disclosure.

Referring to FIGS. 23a and 23b, in operation 2311, at least one processor (e.g., a processor 304 in FIG. 3) of an external electronic device (e.g., an electronic device 102 in FIG. 1 or an external electronic device 300 in FIG. 3) (e.g., a Leader thread device or a node thread device) may be joined (e.g., included) in a Thread Network Partition. According to an embodiment, when attempting to join the Thread Network Partition, the at least one processor may identify whether connection information (e.g., an Active Operational Dataset and/or a Pending Operational Dataset) of the Thread Network Partition is identical to connection information stored in memory (e.g., memory 306 in FIG. 3), and if the connection information of the Thread Network Partition is identical to the stored connection information, the at least one processor may join the Thread Network Partition.

In operation 2313, the at least one processor may receive an MLE message (e.g., an MLE Advertisement message) transmitted from at least one Leader thread device via at least one communication circuit (e.g., a communication circuit 302 in FIG. 3). The MLE Advertisement message may include network data (e.g., Leader data), and the Leader data may be implemented to be similar to or substantially the same as that described in FIG. 11, so a detailed description thereof will be omitted herein.

The at least one processor may identify whether a value of a Position ID Checker of the at least one Leader thread device is identical to a value of a Position ID Checker of the external electronic device in operation 2319. As a result of the identification, if the value of the Position ID Checker of the at least one Leader thread device is not identical to the value of the Position ID Checker of the external electronic device, the at least one processor may maintain the Thread Network Partition to which the external electronic device is currently attached as it is in operation 2317.

As the result of the identification in operation 2319, if the value of the Position ID Checker of the at least one Leader thread device and the value of the Position ID Checker of the external electronic device are identical, the at least one processor may identify whether the value of the Position ID Checker is 0 in operation 2321. As a result of the identification, if the value of the Position ID Checker is not 0, the at least one processor may identify whether a Position ID of the at least one Leader thread device and a Position ID of the external electronic device are identical in operation 2323. As a result of the identification, if the Position ID of the at least one Leader thread device and the Position ID of the external electronic device are not identical, the at least one processor may maintain the Thread Network Partition to which the external electronic device is currently attached as it is in operation 2317.

As the result of the identification in operation 2323, if a plurality of pieces of Position Info are identical, the at least one processor may identify whether a weight value of the at least one Leader thread device and a weight value of the external electronic device are different in operation 2325. As the result of the identification in operation 2323, if the Position ID of the at least one Leader thread device and the Position ID of the external electronic device are identical, the at least one processor may identify whether the weight value of the at least one Leader thread device and the weight value of the external electronic device are different in operation 2325.

As a result of the identification in operation 2323, if the weight value of the at least one Leader thread device and the weight value of the external electronic device are different, the at least one processor may perform, with the at least one Leader thread device, a Thread Network Partition-merging operation in a form of including a Thread Network Partition in a Thread Network Partition with a larger weight value in operation 2327.

As a result of the identification in operation 2325, the weight value of the at least one Leader thread device and the weight value of the external electronic device are not different, the at least one processor may identify whether a Partition ID of the at least one Leader thread device and a Partition ID of the external electronic device are different in operation 2329. As a result of the identification, if the Partition ID of the at least one Leader thread device and the Partition ID of the external electronic device are different, the at least one processor may perform, with the at least one Leader thread device, the Thread Network Partition-merging operation in a form of including the Thread Network Partition in a Thread Network Partition with a larger Partition ID in operation 2331.

As the result of the verification in operation 2329, if the Partition ID of the at least one Leader thread device and the Partition ID of the external electronic device are not different, the at least one processor may identify whether a value of at least one of a VN_version, a VN_stable_version, or an ID_sequence_number of the at least one Leader thread device is different from a value of at least one of a VN_version, a VN_stable_version, or an ID_sequence_number of the external electronic device in operation 2333. As a result of the identification, if the value of the at least one of the VN_version, the VN_stable_version, or the ID_sequence_number of the at least one Leader thread device is different from the value of the at least one of the VN_version, the VN_stable_version, or the ID_sequence_number of the external electronic device, the at least one processor may reset the Partition ID of the external electronic device to a random value in operation 2335. A fact that the value of the at least one of the VN_version, the VN_stable_version, or the ID_sequence_number of the at least one Leader thread device is different from the value of the at least one of the VN_version, the VN_stable_version, or the ID_sequence_number of the external electronic device although the weight value and the Partition ID of the at least one Leader thread device are identical to the weight value and the Partition ID of the external electronic device may mean that the Thread Network Partition of the at least one Leader thread device is different from the Thread Network Partition of the external electronic device. So, the at least one processor may reset the Partition ID of the Thread Network Partition of the external electronic device to the random value. In this case, if the external electronic device receives an MLE Advertisement message from the at least one Leader thread device thereafter, a Thread Network Partition-merging operation may be performed between the external electronic device and the at least one Leader thread device because the Partition ID of the Thread Network Partition of the external electronic device is different from the Partition ID of the Thread Network Partition of the at least one Leader thread device. In an embodiment, an operation of resetting the Partition ID may be performed when a new Thread Network Partition is generated.

As the result of the identification in operation 2333, if the value of the at least one of the VN_version, the VN_stable_version, or the ID_sequence_number of the at least one Leader thread device is not different from the value of the at least one of the VN_version, the VN_stable_version, or the ID_sequence_number of the external electronic device, the at least one processor may identify that the at least one Leader thread device is a Leader thread device included in the Thread Network Partition to which the external electronic device is attached, and maintain the Thread Network Partition to which the external electronic device is currently attached as it is in operation 2337.

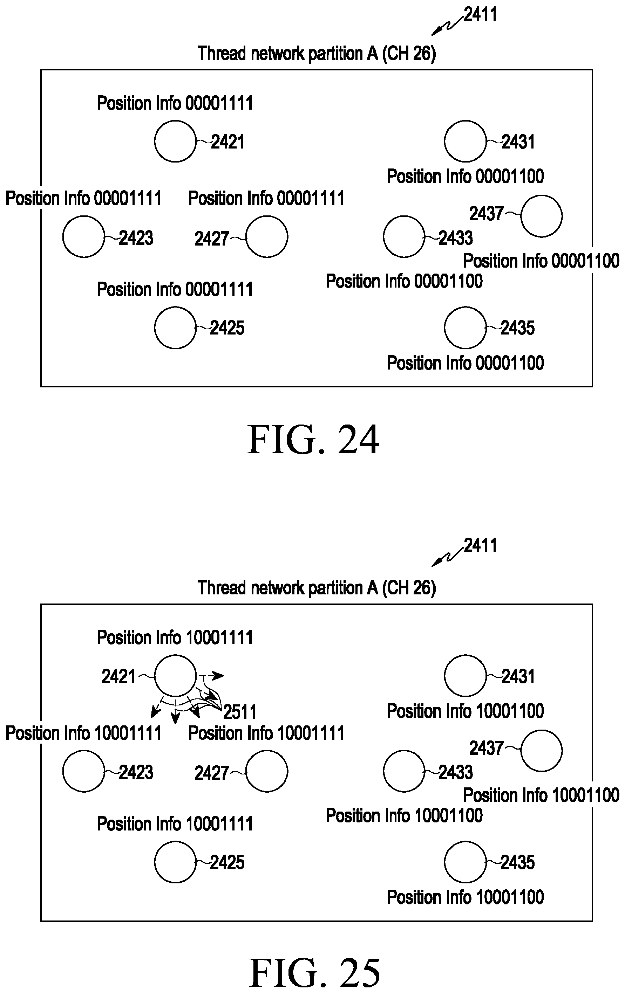

FIG. 24 is a diagram for explaining a Thread Network Partition-dividing operation according to an embodiment of the disclosure.

Referring to FIG. 24, there may be a Thread Network Partition A 2411 which is a Thread Network Partition using a channel 26 (CH 26) as an operation channel. The Thread Network Partition A 2411 includes a total of eight thread devices 2421, 2423, 2425, 2427, 2431, 2433, 2435, and 2437. The thread devices 2421, 2423, 2425, and 2427 may have the same value (e.g., 00001111) of Position Info, and the thread devices 2431, 2433, 2435, and 2437 may have the same value (e.g., 00001100) of the Position Info. The thread devices 2421, 2423, 2425, and 2427 may have the same value (e.g., 0) of a Position ID Checker and the same Position ID (e.g., 0001100), and the thread devices 2431, 2433, 2435, and 2437 may have the same value (e.g., 0) of the Position ID Checker and the same Position ID (e.g., 0001100).

The Thread Network Partition A 2411 may be a Thread Network Partition which does not separate a Thread Network Partition based on a position (for example, in which a Thread Network Partition-dividing scheme based on the position is not used). So, a value of a Position ID Checker of all of thread devices included in the Thread Network Partition A 2411 may be set to "0".

A case may occur that the Thread Network Partition A 2411 which is operated in a form of not separating the Thread Network Partition based on the position needs to be operated in a form of separating the Thread Network Partition based on the position. In this case, the value of the Position ID Checker of all of the thread devices included in the Thread Network Partition A 2411 may need to be set to "1". In an embodiment, based on a user input in an electronic device (e.g., an electronic device 101 in FIG. 1 or 2), the Thread Network Partition A 2411 may be changed to be operated in the form of separating the Thread Network Partition based on the position.

FIG. 25 is a diagram for explaining a Thread Network Partition-dividing operation according to an embodiment of the disclosure.

As described in FIG. 24, there may be a Thread Network Partition A 2411 which is a Thread Network Partition using a channel 26 (CH 26) as an operation channel. In the Thread Network Partition A 2411, a total of eight thread devices 2421, 2423, 2425, 2427, 2431, 2433, 2435, and 2437 may have the same value (e.g., 0) of a Position ID Checker. Since the value of the Position ID Checker is set to 0, a Thread Network Partition-separating operation may not be performed based on a position in the Thread Network Partition A 2411.

A case may occur that the Thread Network Partition A 2411 which is operated in a form of not separating a Thread Network Partition based on the position needs to be operated in a form of separating the Thread Network Partition based on the position. In this case, a value of the Position ID Checker of all of thread devices included in the Thread Network Partition A 2411 may need to be set to "1". Among the thread devices 2421, 2423, 2425, 2427, 2431, 2433, 2435, and 2437, the thread device 2421 may be a Leader thread device, and the remaining thread devices 2423, 2425, 2427, 2431, 2433, 2435, and 2437 may be node thread devices.

In an embodiment, based on a user input in an electronic device (e.g., an electronic device 101 in FIG. 1 or 2), the Thread Network Partition A 2411 may be changed to be operated in the form of separating the Thread Network Partition based on the position. If the Thread Network Partition A 2411 needs to be operated in the form of separating the Thread Network Partition based on the position based on the user input, the electronic device may transmit, to the Leader thread device 2421, a message requesting to change a value of a Position ID Checker from "0" to "1". The Leader thread device 2421 may receive, from the electronic device, the message requesting to change the value of the Position ID Checker from "0" to "1", and may change the value of the Position ID Checker from "0" to "1" based on the received message. In addition, the Leader thread device 2421 may change the operation channel of the Thread Network Partition A 2411 from the channel 26 to a channel 15 (CH 15). The Leader thread device 2421 may apply the changed value of the Position ID Checker and the changed operation channel to an Active Operational Dataset and a Pending Operational Dataset, and in operation 2511, the Leader thread device 2421 may transmit the Active Operational Dataset and the Pending Operational Dataset including the Position ID Checker whose value has been changed from "0" to "1" and information about the changed operation channel via an MLE message (e.g., an MLE Advertisement message).

Each of the node thread devices 2423, 2425, 2427, 2431, 2433, 2435, and 2437 may receive the MLE Advertisement message transmitted from the Leader thread device 2421. Each of the node thread devices 2423, 2425, 2427, 2431, 2433, 2435, and 2437 may update its Active Operational Dataset and Pending Operational Dataset with the Active Operational Dataset and the Pending Operational Dataset included in the received MLE Advertisement message, and therefore, a value of a Position ID Checker of each of the node thread devices 2423, 2425, 2427, 2431, 2433, 2435, and 2437 may be changed from 0 to 1, and the operation channel may be changed from the channel 26 to the channel 15. For example, a value of Position Info of the thread devices 2421, 2423, 2425, and 2427 may be changed from 00001111 to 10001111, and a value of the Position Info of the thread devices 2431, 2433, 2435, and 2437 may be changed from 00001100 to 10001100.

In FIG. 25, a case that the MLE Advertisement message includes the Active Operational Dataset and the Pending Operational Dataset which include the Position ID Checker whose value has been changed to 1 and the information about the changed operation channel has been described as an example, however, the MLE Advertisement message may also include only the Position ID Checker whose value has been changed to 1 and the information about the changed operation channel.

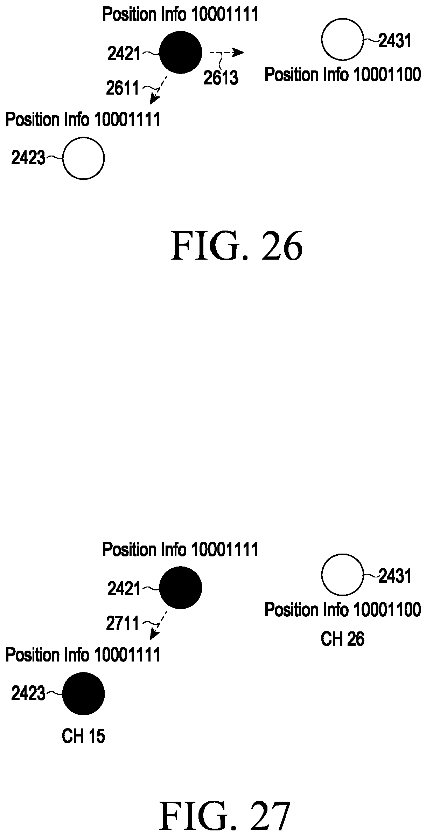

FIG. 26 is a diagram for explaining a Thread Network Partition-dividing operation according to an embodiment of the disclosure.

Referring to FIG. 26, as described in FIG. 25, node thread devices (e.g., a node thread device 2423 and a node thread device 2431) which receive an MLE Advertisement message transmitted from a Leader thread device 2421 may update an Active Operational Dataset and a Pending Operational Dataset based on the received MLE Advertisement message. A value of a Position ID Checker of each of the node thread devices 2423 and the node thread devices 2431 which update the Active Operational Dataset and the Pending Operational Dataset may be "1", and an operation channel may be a channel 15.

The node thread device 2423 which updates the Active Operational Dataset and the Pending Operational Dataset may attempt to attach to a Thread Network Partition A (e.g., a Thread Network Partition A 2411 in FIG. 24 or FIG. 25) via a Leader thread device 2421 in operation 2611. The node thread device 2431 which updates the Active Operational Dataset and the Pending Operational Dataset may attempt to attach to the Thread Network Partition A via the Leader thread device 2421 in operation 2613.

In FIG. 26, a value of Position Info of the node thread device 2423 may be "10001111", and a value of Position Info of the node thread device 2431 may be "10001100". Since the value of the Position ID Checker of each of the Leader thread device 2421, the node thread device 2423, and the node thread device 2431 is "1", a Thread Network Partition-dividing scheme based on a position may be applied.

FIG. 27 is a diagram for explaining a Thread Network Partition-dividing operation according to an embodiment of the disclosure.

Referring to FIG. 27, as described in FIG. 26, a value of Position Info of a node thread device 2423 may be "10001111", and a value of Position Info of a node thread device 2431 may be "10001100". Since a value of a Position ID Checker of each of a Leader thread device 2421, the node thread device 2423, and the node thread device 2431 is "1", a Thread Network Partition-dividing scheme based on a position may be applied.

Since the value of the Position ID Checker of each of the Leader thread device 2421, the node thread device 2423, and the node thread device 2431 is "1", only the node thread device 2423 which has the same Position ID as the Position ID (e.g., 0001111) of the Leader thread device 2421 may attach to the Leader thread device 2421 in operation 2711. Since the node thread device 2423 attaches to the Leader thread device 2421, the node thread device 2423 may use a channel 15 which is the same operation channel as the Leader thread device 2421.

Since a Position ID (e.g., 0001100) of the node thread device 2431 is different from a Position ID (e.g., 0001111) of the Leader thread device 2421, it may not attach to the node thread device 2431.

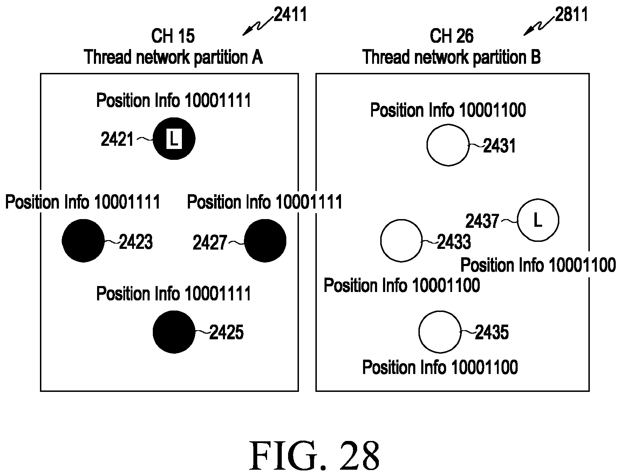

FIG. 28 is a diagram for explaining a Thread Network Partition-dividing operation according to an embodiment of the disclosure.

Referring to FIG. 28, as described in FIG. 25, each of node thread devices 2423, 2425, 2427, 2431, 2433, 2435, and 2437 which receives an MLE Advertisement message transmitted from a Leader thread device 2421 may receive the MLE Advertisement message transmitted from the Leader thread device 2421. Each of the node thread devices 2423, 2425, 2427, 2431, 2433, 2435, and 2437 may update its Active Operational Dataset and Pending Operational Dataset with an Active Operational Dataset and a Pending Operational Dataset included in the received MLE Advertisement message, and therefore, a value of a Position ID Checker of each of the node thread devices 2423, 2425, 2427, 2431, 2433, 2435, and 2437 may be changed from 0 to 1, and an operation channel may be changed from a channel 26 to a channel 15. For example, a value of Position Info of the thread devices 2421, 2423, 2425, and 2427 may be changed from 00001111 to 10001111, and a value of the Position Info of the thread devices 2431, 2433, 2435, and 2437 may be changed from 00001100 to 10001100.

All of node thread devices 2423, 2425, 2427, 2431, 2433, 2435, and 2437 included in a Thread Network Partition A 2411 may perform an attaching operation to the Leader thread device 2421 as described in FIG. 27. If all of the node thread devices 2423, 2425, 2427, 2431, 2433, 2435, and 2437 completes the attaching operation to the Leader thread device 2421, node thread devices (e.g., the node thread devices 2423, 2425, and 2427) with the same Position ID as the Leader thread device 2421 may attach to the Leader thread device 2421, so the Thread Network Partition A 2411 may be maintained as is. According to an embodiment, it may be seen that the Thread Network Partition A 2411 is maintained as is, but the operation channel of the Thread Network Partition A 2411 is changed from a channel 26 to a channel 15.

However, node thread devices (e.g., the node thread devices 2431, 2433, 2435, and 2437) with a different Position ID from the Leader thread device 2421 may not attach to the Leader thread device 2421. The node thread devices 2431, 2433, 2435, and 2437 which may not attach to the Leader thread device 2421 may continuously perform a discovery operation for another Thread Network Partition or a parent thread device.

Each of the node thread devices 2431, 2433, 2435, and 2437 may use the Pending Operational Dataset as the Active Operational Dataset if a delay timer of the backed up Pending Operational Dataset expires. In this case, the value of the Position ID Checker may be maintained as it is, and the Active Operational Dataset may be updated in a form that the operation channel is restored. Each of the node thread devices 2431, 2433, 2435, and 2437 may generate a new Thread Network Partition (e.g., a Thread Network Partition B 2811) based on the updated Active Operational Dataset. Since the value of a Position ID Checker of each of the node thread devices 2431, 2433, 2435, and 2437 included in the Thread Network Partition B 2811 is "1", the node thread devices 2431, 2433, 2435, and 2437 with the same Position ID "0001100" may generate the same Thread Network Partition (e.g., the Thread Network Partition B 2811) based on a position. An operation channel of the Thread Network Partition B 2811 may be a channel 26 which is different from the channel 15 which is the operation channel of the Thread Network Partition A 2411. According to an embodiment, the thread device 2437 may be a Leader thread device. The Leader thread device may be any one of thread devices included in a Thread Network Partition, and the Leader thread device may be determined based on various parameters. According to the disclosure, even though all of the node thread devices 2423, 2425, 2427, 2431, 2433, 2435, and 2437 included in the Thread Network Partition A 2411 exist in a physical position which may be registered to the Leader thread device 2421, it may be divided into separate Thread Network Partitions (e.g., the Thread Network Partition A 2411 and the Thread Network Partition B 2811) based on the position, and the separate Thread Network Partitions may prevent congestion by using different operation channels.

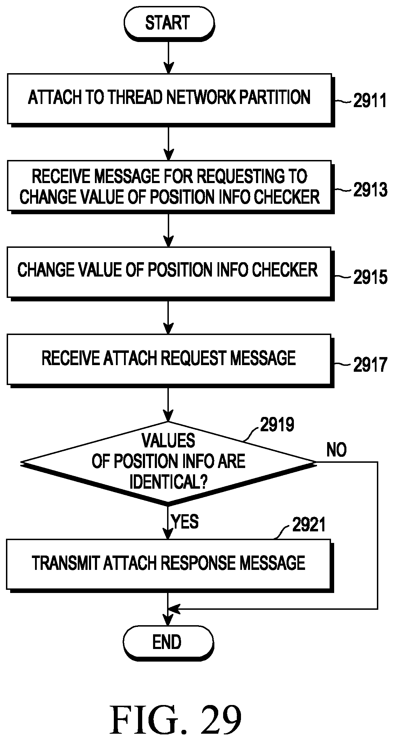

FIG. 29 is a flowchart illustrating an operating process of an external electronic device according to an embodiment of the disclosure.

Referring to FIG. 29, in operation 2911, at least one processor (e.g., a processor 304 in FIG. 3) of an external electronic device (e.g., an electronic device 102 in FIG. 1 or an external electronic device 300 in FIG. 3) (e.g., a Leader thread device) may be attached to (for example, included in) a Thread Network Partition. In an embodiment, a value of a Position ID Checker of the external electronic device may be set to "0".

In operation 2913, the at least one processor may receive, from an electronic device (e.g., an electronic device 101 in FIG. 1 or FIG. 2), a message requesting to change the value of the Position ID Checker from "0" to "1" via at least one communication circuit (e.g., a communication circuit 302 in FIG. 3).

In operation 2915, the at least one processor may change a value of the Position ID Checker from "0" to "1" based on the received message. The at least one processor may change an operation channel of a Thread Network Partition including at least one external electronic device from a first channel (e.g., a channel 26) to a second channel (e.g., a channel 15). The at least one processor may apply the changed value of the Position ID Checker and the changed operation channel to an Active Operational Dataset and a Pending Operational Dataset, and in operation 2915, transmit the Active Operational Dataset and the Pending Operational Dataset including the Position ID Checker whose value is changed from "0" to "1" and information about the changed operation channel via an MLE message (e.g., an MLE Advertisement message).

As the external electronic device transmits the MLE Advertisement message, the node thread devices may receive the MLE Advertisement message, and update the Active Operational Dataset and the Pending Operational Dataset based on the received MLE Advertisement message. A value of a Position ID Checker of each of the node thread devices which update the Active Operational Dataset and the Pending Operational Dataset may be "1", and an operation channel may be a second channel. The node thread devices which update the Active Operational Dataset and the Pending Operational Dataset may attempt to attach to the external electronic device.

The at least one processor may receive an attach request message (e.g., an MLE child ID request message) from at least one node thread device via the at least one communication circuit in operation 2917. In an embodiment, the attach request message may include a Position ID Checker and a Position ID. In operation 2919, the at least one processor may identify whether the Position ID included in the attach request message is identical to a Position ID of the external electronic device stored in memory (e.g., memory 306 in FIG. 3).

As a result of the identification in operation 2919, if the Position ID included in the attach request message is not identical to the Position ID of the external electronic device, the at least one processor may terminate without performing any further operations.

As the result of the identification in operation 2919, if the Position ID included in the attach request message is identical to the Position ID of the external electronic device, the at least one processor may transmit an attach response message (e.g., an MLE child ID response message) which is a response message to the attach request message via the at least one communication circuit in operation 2921. The attach response message may include an Active Operational Dataset and a Pending Operational Dataset of the external electronic device.

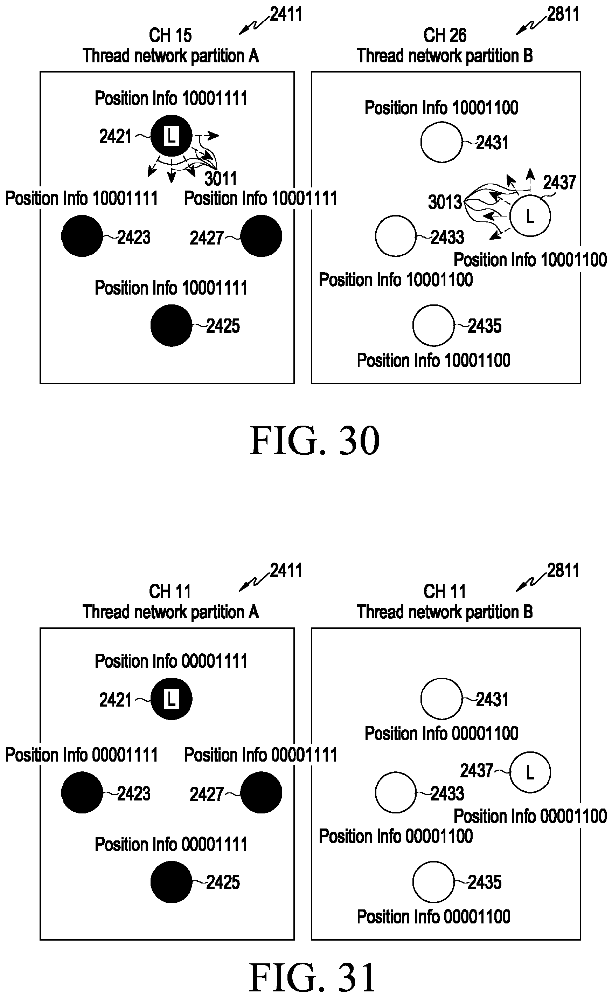

FIG. 30 is a diagram for explaining a Thread Network Partition-merging operation according to an embodiment of the disclosure.

Referring to FIG. 30, as described in FIG. 28, a Thread Network Partition A 2411 uses a channel 15 as an operation channel, and a value of a Position ID Checker of thread devices 2421, 2423, 2425, and 2427 included in the Thread Network Partition A 2411 may be "1" and a Position ID may be "0001111". Position Info of the thread devices 2421, 2423, 2425, and 2427 may be "10001111".

A Thread Network Partition B 2811 uses a channel 26 as the operation channel, and a value of a Position ID Checker of thread devices 2431, 2433, 2435, and 2437 included in the Thread Network Partition B 2811 may be "1" and a Position ID may be "0001100". Position Info of the thread devices 2431, 2433, 2435, and 2437 may be "10001100".

In this way, a case may occur that the Thread Network Partition A 2411 and the Thread Network Partition B 2811, which are independently operated in a form of separating a Thread Network Partition based on a position, need be operated in a form of not separating the Thread Network Partition based the position. In an embodiment, the Thread Network Partition A 2411 and the Thread Network Partition B 2811 may be changed to be operated in the form of not separating the Thread Network Partition based on the position based on a user input in an electronic device (e.g., an electronic device 101 in FIG. 1 or 2). In this case, a value of a Position ID Checker of all of thread devices included in the Thread Network Partition A 2411 and the Thread Network Partition B 2811 may need to be set to "0".

Among the thread devices 2421, 2423, 2425, and 2427 included in the Thread Network Partition A 2411, the thread device 2421 may be a Leader thread device, and the remaining thread devices 2423, 2425, and 2427 may be node thread devices.

Among the thread devices 2431, 2433, 2435, and 2437 included in the Thread Network Partition B 2811, the thread device 2437 may be a Leader thread device, and the remaining thread devices 2431, 2433, and 2435 may be node thread devices.

If the Thread Network Partition A 2411 and the Thread Network Partition B 2811 need to be operated in the form of not separating the Thread Network Partition based on the position based on the user input, the electronic device may transmit a message requesting to change the value of the Position ID Checker from "1" to "0" to the Leader thread device 2421 of the Thread Network Partition A 2411 and the Leader thread device 2437 of the Thread Network Partition B 2811. Additionally, based on the user input, the electronic device may further include, in the message, information instructing that the operation channel of the Thread Network Partition A 2411 and the operation channel of the Thread Network Partition B 2811 will be changed to a channel 11 which is a new operation channel. In FIG. 30, the case that the electronic device instructs change each of the operation channel of the Thread Network Partition A 2411 and the operation channel of the Thread Network Partition B 2811 to the channel 11 has been described as an example, however the electronic device may also instruct to change any one of the channel 15, which is the operation channel of the Thread Network Partition A 2411, and the channel 26, which is the operation channel of the Thread Network Partition B 2811, to the new operation channel.

The Leader thread device 2421 may receive, from the electronic device, the message including the information requesting to change the value of the Position ID Checker from "1" to "0" and instructing to change the operation channel to the channel 11, and may change the value of the Position ID Checker from "1" to "0" based on the received message. In addition, the Leader thread device 2421 may change the operation channel of the Thread Network Partition A 2411 from the channel 15 to the channel 11 based on the received message. The Leader thread device 2421 may apply the changed value of the Position ID Checker and the changed operation channel to an Active Operational Dataset and a Pending Operational Dataset. The Leader thread device 2421 may transmit the Active Operational Dataset and the Pending Operational Dataset including the Position ID Checker whose value is changed from "1" to "0" and information about the changed operation channel via an MLE message (e.g., an MLE Advertisement message) in operation 3011.

The Leader thread device 2437 may receive, from the electronic device, the message including the information requesting to change the value of the Position ID Checker from "1" to "0" and instructing to change the operation channel to the channel 11, and may change the value of the Position ID Checker from "1" to "0" based on the received message. In addition, the Leader thread device 2437 may change the operation channel of the Thread Network Partition B 2811 from the channel 26 to the channel 11 based on the received message. The Leader thread device 2437 may apply the changed value of the Position ID Checker and the changed operation channel to an Active Operational Dataset and a Pending Operational Dataset. The Leader thread device 2437 may transmit the Active Operational Dataset and the Pending Operational Dataset including the Position ID Checker whose value is changed from "1" to "0" and information about the changed operation channel via an MLE message (e.g., an MLE Advertisement message) in operation 3013.

In FIG. 30, a case that the MLE Advertisement message includes the Active Operational Dataset and the Pending Operational Dataset which include the Position ID Checker whose value is changed to 0 and the information about the changed operation channel has been described as an example, however, the MLE Advertisement message may also include only the Position ID Checker whose value is changed to 0 and the information about the changed operation channel.

FIG. 31 is a diagram for explaining a Thread Network Partition-merging operation according to an embodiment of the disclosure.

Referring to FIG. 31, as described in FIG. 30, node thread devices 2423, 2425, and 2427 which receive an MLE Advertisement message transmitted from a Leader thread device 2421 of a Thread Network Partition A 2411 may update an Active Operational Dataset and a Pending Operational Dataset based on the received MLE Advertisement message. A value of a Position ID Checker of each of the node thread devices 2423, 2425, and 2427 which update the Active Operational Dataset and the Pending Operational Dataset may be "0", and an operation channel may be channel 11. Accordingly, a value of Position Info of each of the Leader thread device 2421 and the node thread devices 2423, 2425, and 2427 may be "00001111".

Node thread devices 2431, 2433, and 2435 which receive an MLE Advertisement message transmitted from a Leader thread device 2821 of a Thread Network Partition B 2811 may update an Active Operational Dataset and a Pending Operational Dataset based on the received MLE Advertisement message. A value of a Position ID Checker of each of the node thread devices 2431, 2433, and 2435 which update the Active Operational Dataset and the Pending Operational Dataset may be "0", and an operation channel may be channel 11. Accordingly, a value of Position Info of each of the Leader thread device 2437 and the node thread devices 2431, 2433, and 2435 may be "00001100".

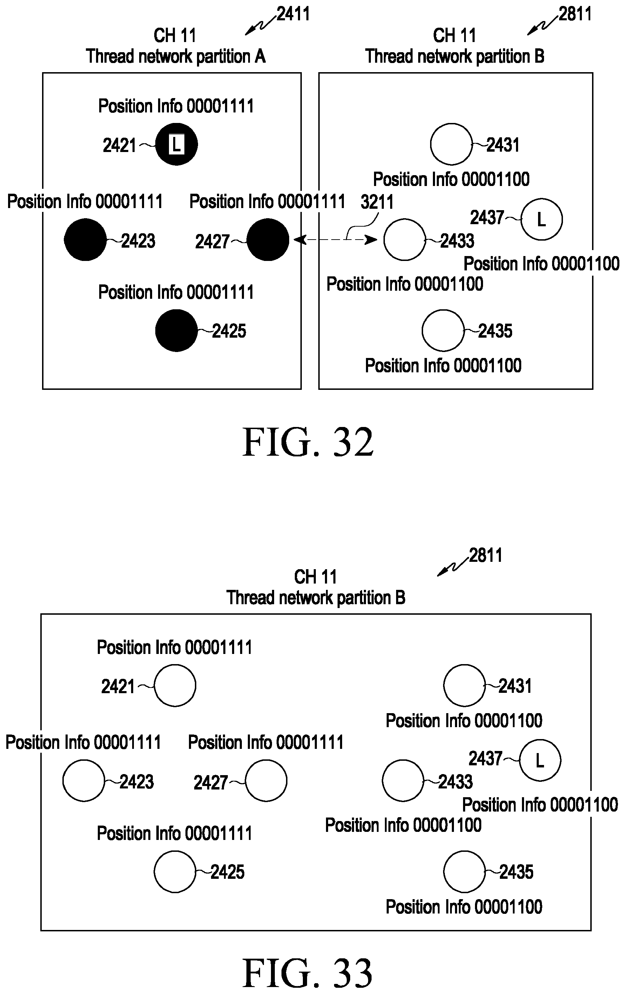

FIG. 32 is a diagram for explaining a Thread Network Partition-merging operation according to an embodiment of the disclosure.

Referring to FIG. 32, as described in FIG. 31, each of node thread devices 2423, 2425, and 2427 and node thread devices 2431, 2433, and 2435 which update an Active Operational Dataset and a Pending Operational Dataset may attempt to attach to a Thread Network Partition in operation 3211.

Thread devices 2421, 2423, 2425, and 2427 included in a Thread Network Partition A 2411 and thread devices 2431, 2433, 2435, and 2437 included in a Thread Network Partition B 2811 may be thread devices existing within a physically close distance which may originally be included in one Thread Network Partition, as described in FIG. 24. Accordingly, the thread devices 2421, 2423, 2425, 2427, 2431, 2433, 2435, and 2437 included in the Thread Network Partition A 2411 and the Thread Network Partition B 2811 which use the same operation channel may perform a discovery operation to perform a Thread Network Partition-merging operation in operation 3211.

FIG. 33 is a diagram for explaining a Thread Network Partition-merging operation according to an embodiment of the disclosure.

Referring to FIG. 33, as described in FIG. 32, each of node thread devices 2423, 2425, and 2427 and node thread devices 2431, 2433, and 2435 which update an Active Operational Dataset and a Pending Operational Dataset may attempt to attach to a Thread Network Partition.

Thread devices 2421, 2423, 2425, and 2427 included in a Thread Network Partition A 2411 and thread devices 2431, 2433, 2435, and 2437 included in a Thread Network Partition B 2811 may be thread devices existing within a physically close distance which may originally be included in one Thread Network Partition, as described in FIG. 24. Accordingly, the thread devices 2421, 2423, 2425, 2427, 2431, 2433, 2435, and 2437 included in the Thread Network Partition A 2411 and the Thread Network Partition B 2811 which use the same operation channel may perform a discovery operation to perform a Thread Network Partition-merging operation.

Since a value of a Position ID Checker of each of the Thread Network Partition A 2411 and the Thread Network Partition B 2811 is "0", the thread devices 2421, 2423, 2425, 2427, 2431, 2433, 2435, and 2437 included in the Thread Network Partition A 2411 and the Thread Network Partition B 2811 may not perform a Thread Network Partition-dividing operation based on a position. Therefore, all of the thread devices 2421, 2423, 2425, and 2427 included in the Thread Network Partition A 2411 may attach to the Thread Network Partition B 2811. In this case, the Thread Network Partition A 2411 may not be maintained, and among the thread devices 2421, 2423, 2425, 2427, 2431, 2433, 2435, and 2437 attached to the Thread Network Partition B 2811, the thread device 2437 may become a Leader thread device. In an embodiment, since the thread device 2421 is also the Leader thread device, a negotiation operation may be performed between the thread device 2421 and the thread device 2437, and based on the negotiation operation, the thread device 2437 may become the Leader thread device. In an embodiment, if the thread device 2427 exists physically within a distance which may be discovered by the thread device 2433, and the thread device 2427 and the thread device 2433 have the same connection information, when the thread device 2427 and the thread device 2433 receive an MLE Announce message transmitted from each other, any one of the thread device 2427 and the thread device 2433 may join a Thread Network Partition to which another thread device belongs. The thread device 2427 and the thread device 2433 may identify that they are connected to a Leader thread device of the corresponding Thread Network Partition based on the MLE Announce message and an MLE Advertisement message (for example, based on a counter value and/or a sequence value received from the Leader thread device). Each of the thread device 2427 and the thread device 2433 may identify that there is a Thread Network Partition different from the Thread Network Partition to which it currently belongs if Leader data included in an MLE Announce message received from at least one neighbor node thread device is different from Leader data stored in each of the thread device 2427 and the thread device 2433. If connection information of the other Thread Network Partition is identical to the connection information of the Thread Network Partition to which it currently belongs, a merging operation may be performed based on a Thread Network Partition-merging rule.

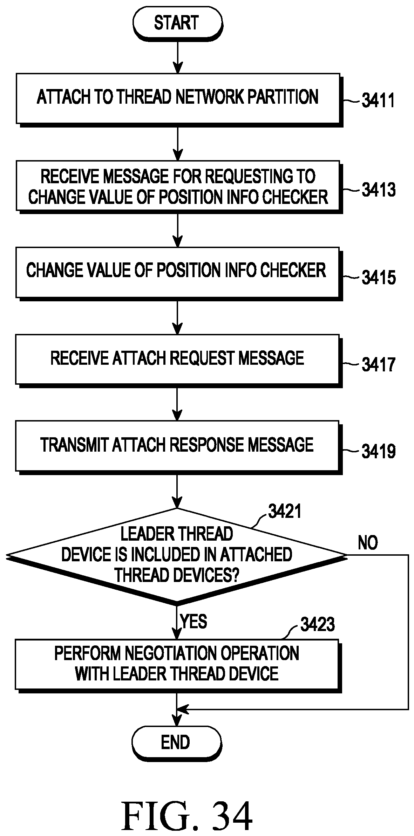

FIG. 34 is a flowchart illustrating an operating process of an external electronic device according to an embodiment of the disclosure.

Referring to FIG. 34, in operation 3411, at least one processor (e.g., a processor 304 in FIG. 3) of an external electronic device (e.g., an electronic device 102 in FIG. 1 or an external electronic device 300 in FIG. 3) (e.g., a Leader thread device) may be attached to (for example, included in) a Thread Network Partition. In an embodiment, a value of a Position ID Checker of the external electronic device may be set to "1"

In operation 3413, the at least one processor may receive a message from an electronic device (e.g., an electronic device 101 in FIG. 1 or FIG. 2) via at least one communication circuit (e.g., a communication circuit 302 in FIG. 3) requesting to change the value of the Position ID Checker from "1" to "0".

In operation 3415, the at least one processor may change the value of the Position ID Checker from "1" to "0" based on the received message. The at least one processor may change an operation channel of a Thread Network Partition including at least one external electronic device from a first channel (e.g., a channel 15 or a channel 26) to a second channel (e.g., a channel 11) based on the received message. The at least one processor may apply the changed value of the Position ID Checker and the changed operation channel to an Active Operational Dataset and a Pending Operational Dataset, and in operation 3415, transmit the Active Operational Dataset and the Pending Operational Dataset including the Position ID Checker whose value is changed from "1" to "0" and information about the changed operation channel via an MLE message (e.g., an MLE Advertisement message). In this way, as the external electronic device transmits the MLE Advertisement message, node thread devices may receive the MLE Advertisement message and update an Active Operational Dataset and a Pending Operational Dataset based on the received MLE Advertisement message. A value of a Position ID Checker of each of the node thread devices which update the Active Operational Dataset and the Pending Operational Dataset may become "0", and an operation channel may become the second channel. The node thread devices which update the Active Operational Dataset and the Pending Operational Dataset may attempt to attach to the external electronic device.

So, the at least one processor may receive an attach request message (e.g., an MLE child ID request message) from at least one node thread device via the at least one communication circuit in operation 3417. In an embodiment, the attach request message may include a Position ID Checker and a Position ID. In operation 3419, the at least one processor may transmit an attach response message (e.g., an MLE child ID response message) as a response message to the attach request message via the at least one communication circuit. The attach response message may include the Active Operational Dataset and the Pending Operational Dataset of the external electronic device.

In operation 3421, the at least one processor may identify whether a Leader thread device exists among the attached thread devices. As a result of the identification, if the Leader thread device exists among the attached thread devices, the at least one processor may perform a negotiation operation with the attached Leader thread device via the at least one communication circuit in operation 3423. In an embodiment, the negotiation operation may be an operation of negotiating a device to operate as a Leader thread device among Leader thread devices attached to the external electronic device. In an embodiment, the Leader thread device may be determined according to a priority based on a Thread Network Partition-merging rule.

According to an embodiment of the disclosure, an operating method of an electronic device (e.g., an electronic device 101 in FIG. 1 or FIG. 2) may include, based on identification of a registration request for an external electronic device (e.g., an electronic device 102 in FIG. 1 or an external electronic device 300 in FIG. 3), registering the external electronic device (e.g., the electronic device 102 in FIG. 1 or the external electronic device 300 in FIG. 3) to correspond to a first area among a plurality of areas managed by the electronic device (e.g., the electronic device 101 in FIG. 1 or FIG. 2).

According to an embodiment of the disclosure, the operating method may include transmitting area information related to the first area to the external electronic device (e.g., the electronic device 102 in FIG. 1 or the external electronic device 300 in FIG. 3).

According to an embodiment of the disclosure, the area information may include first information indicating whether a thread network partition is divided based on a position, and second information indicating a position of the first area.

According to an embodiment of the disclosure, the first information may include a first value indicating that the thread network partition is divided based on the position, or a second value indicating that the thread network partition is not divided based on the position.

According to an embodiment of the disclosure, the operating method may include, after transmitting the area information, identifying that the first information including the first value or the second value is changed.

According to an embodiment of the disclosure, the operating method may include transmitting the changed first information to the external electronic device (e.g., the electronic device 102 in FIG. 1 or the external electronic device 300 in FIG. 3).

According to an embodiment of the disclosure, a thread network partition to which area information in which the first information is a first value indicating that the thread network partition is divided based on the position, and the second information is a fourth value different from a third value indicating the position of the first area is applied, and a thread network partition to which area information in which the first information is the first value and the second information is the third value is applied may not be merged.

According to an embodiment of the disclosure, a thread network partition to which area information in which the first information is a first value indicating that the thread network partition is divided based on the position, and the second information is a third value indicating the position of the first area is applied, and another thread network partition to which the area information in which the first information is the first value and the second information is the third value is applied may be merged.

According to an embodiment of the disclosure, a thread network partition to which area information in which the first information is a second value indicating that the thread network partition is not divided based on the position is applied, and another thread network partition to which the area information in which the first information is the second value is applied may be merged.

According to an embodiment of the disclosure, an operating method of an electronic device (e.g., an electronic device 102 in FIG. 1 or an external electronic device 300 in FIG. 3) may include, based on the electronic device (e.g., the electronic device 102 in FIG. 1 or the external electronic device 300 in FIG. 3) being registered to correspond to a first area among a plurality of areas managed by a first external electronic device (e.g., an electronic device 101 in FIG. 1 or FIG. 2), receiving first area information related to the first area from the first external electronic device.

According to an embodiment of the disclosure, the operating method may include, based on the first area information, determining whether to merge a first thread network partition to which the electronic device (e.g., the electronic device 102 in FIG. 1 or the external electronic device 300 in FIG. 3) belongs with a second thread network partition to which a second external electronic device (e.g., the electronic device 102 in FIG. 1 or the external electronic device 300 in FIG. 3) belongs, or to maintain the first thread network partition independently from the second thread network partition.

According to an embodiment of the disclosure, the first area information may include first information indicating whether a thread network partition is to be divided based on a position, and second information indicating a position of the first area.

According to an embodiment of the disclosure, the first information includes a first value indicating that the thread network partition is divided based on the position, or a second value indicating that the thread network partition is not divided based on the position.

According to an embodiment of the disclosure, the operating method may include receiving first information in which the first value or the second value is changed, from the external electronic device.

According to an embodiment of the disclosure, the operating method may include transmitting the changed first information to the third external electronic device (e.g., the electronic device 102 in FIG. 1 or the external electronic device 300 in FIG. 3) included in the first thread network partition.

According to an embodiment of the disclosure, the determining may include receiving second area information applied to the second thread network partition from a fourth external electronic device (e.g., the electronic device 102 in FIG. 1 or the external electronic device 300 in FIG. 3) included in the second thread network partition.

According to an embodiment of the disclosure, the determining may include identifying whether each of the first information included in the first area information and the first information included in the second area information is a first value indicating that the thread network partition is divided based on the position.

According to an embodiment of the disclosure, the determining may include, based on each of the first information included in the first area information and the first information included in the second area information being the first value, identifying whether a value of the second information included in the second area information is identical to a third value indicating the position of the first area which is included in the second area information.

According to an embodiment of the disclosure, the determining may include, based on the value of the second information included in the second area information being identical to the third value, determining to merge the first thread network partition and the second thread network partition.

According to an embodiment of the disclosure, the determining may include, based on the value of the second information included in the second area information being different from the third value, determining to maintain the first thread network partition independently from the second thread network partition.

According to an embodiment of the disclosure, the determining may include receiving second area information applied to the second thread network partition from a fourth external electronic device (e.g., the electronic device 102 in FIG. 1 or the external electronic device 300 in FIG. 3) included in the second thread network partition.

According to an embodiment of the disclosure, the determining may include identifying whether a value of the first information included in the first area information and a value of the first information included in the second area information are identical.

According to an embodiment of the disclosure, the determining may include, based on the value of the first information included in the first area information and the value of the first information included in the second area information being different, determining to maintain the first thread network partition independently from the second thread network partition.

According to an embodiment of the disclosure, the determining may include, based on the value of the first information included in the first area information and the value of the first information included in the second area information being identical, identifying whether the value of the first information included in the first area information and the value of the first information included in the second area information are a second value indicating that the thread network partition is not divided based on the position.

According to an embodiment of the disclosure, the determining may include, based on the value of the first information included in the first area information and the value of the first information included in the second area information being a first value indicating that the thread network partition is divided based on the position, identifying whether a value of the second information included in the first area information and a value of the second information included in the second area information are identical.

According to an embodiment of the disclosure, the determining may include, based on the value of the second information included in the first area information and the value of the second information included in the second area information being not identical, determining to maintain the first thread network partition independently from the second thread network partition.

## Claims

1. An electronic device (101), comprising:
at least one communication circuit (190; 192); and
at least one processor (120; 204) operably connected to the at least one communication circuit, wherein the at least one processor is configured to:
based on identification of a registration request for an external electronic device (102; 300), register the external electronic device to correspond to a first area among a plurality of areas managed by the electronic device, and
transmit area information related to the first area to the external electronic device via the at least one communication circuit,
wherein the area information includes first information indicating whether a thread network partition is divided based on a position, and second information indicating a position of the first area.

2. The electronic device of claim 1, wherein the first information includes a first value indicating that the thread network partition is divided based on the position, or a second value indicating that the thread network partition is not divided based on the position, and
wherein the at least one processor is further configured to:
after transmitting the area information, identify that the first information including the first value or the second value is changed, and
transmit the changed first information to the external electronic device via the at least one communication circuit.

3. The electronic device of claim 1 or 2, wherein a thread network partition to which area information in which the first information is a first value indicating that the thread network partition is divided based on the position, and the second information is a fourth value different from a third value indicating the position of the first area is applied, and a thread network partition to which area information in which the first information is the first value and the second information is the third value is applied are not merged.

4. The electronic device of any one of claims 1 to 3, wherein a thread network partition to which area information in which the first information is a first value indicating that the thread network partition is divided based on the position, and the second information is a third value indicating the position of the first area is applied, and another thread network partition to which the area information in which the first information is the first value and the second information is the third value is applied are merged.

5. The electronic device of any one of claims 1 to 4, wherein a thread network partition to which area information in which the first information is a second value indicating that the thread network partition is not divided based on the position is applied, and another thread network partition to which the area information in which the first information is the second value is applied are merged.

6. An electronic device (102; 300), comprising:
at least one communication circuit (302); and
at least one processor (304) operably connected to the at least one communication circuit, wherein the at least one processor is configured to:
based on the electronic device being registered to correspond to a first area among a plurality of areas managed by a first external electronic device (101), receive, via the at least one communication circuit, first area information related to the first area from the first external electronic device, and
based on the first area information, determine whether to merge a first thread network partition to which the electronic device belongs with a second thread network partition to which a second external electronic device (102; 300) belongs, or to maintain the first thread network partition independently from the second thread network partition, and
wherein the first area information includes first information indicating whether a thread network partition is to be divided based on a position, and second information indicating a position of the first area.

7. The electronic device of claim 6, wherein the at least one processor is further configured to:
transmit, via the at least one communication circuit, the first area information to a third external electronic device (102; 300) included in the first thread network partition.

8. The electronic device of claim 6 or 7, wherein the first information includes a first value indicating that the thread network partition is divided based on the position, or a second value indicating that the thread network partition is not divided based on the position, and
wherein the at least one processor is further configured to:
receive, via the at least one communication circuit, first information in which the first value or the second value is changed, from the external electronic device.

9. The electronic device of claim 8, wherein the at least one processor is further configured to:
transmit, via the at least one communication circuit, the changed first information to the third external electronic device included in the first thread network partition.

10. The electronic device of any one of claims 6 to 9, wherein the at least one processor is configured to:
receive, via the at least one communication circuit, second area information applied to the second thread network partition from a fourth external electronic device included in the second thread network partition,
identify whether each of the first information included in the first area information and the first information included in the second area information is a first value indicating that the thread network partition is divided based on the position,
based on each of the first information included in the first area information and the first information included in the second area information being the first value, identify whether a value of the second information included in the second area information is identical to a third value indicating the position of the first area which is included in the second area information, and
based on the value of the second information included in the second area information being identical to the third value, determine to merge the first thread network partition and the second thread network partition.

11. The electronic device of claim 10, wherein the at least one processor is configured to:
based on the value of the second information included in the second area information being different from the third value, determine to maintain the first thread network partition independently from the second thread network partition.

12. The electronic device of any one of claims 6 to 11, wherein the at least one processor is configured to:
receive, via the at least one communication circuit, second area information applied to the second thread network partition from a fourth external electronic device included in the second thread network partition,
identify whether a value of the first information included in the first area information and a value of the first information included in the second area information are identical, and
based on the value of the first information included in the first area information and the value of the first information included in the second area information being different, determine to maintain the first thread network partition independently from the second thread network partition.

13. The electronic device of claim 12, wherein the at least one processor is configured to:
based on the value of the first information included in the first area information and the value of the first information included in the second area information being identical, identify whether the value of the first information included in the first area information and the value of the first information included in the second area information are a second value indicating that the thread network partition is not divided based on the position,
based on the value of the first information included in the first area information and the value of the first information included in the second area information being a first value indicating that the thread network partition is divided based on the position, identify whether a value of the second information included in the first area information and a value of the second information included in the second area information are identical, and
based on the value of the second information included in the first area information and the value of the second information included in the second area information being not identical, determine to maintain the first thread network partition independently from the second thread network partition.

14. An operating method of an electronic device (102; 300), the operating method comprising:
based on the electronic device being registered to correspond to a first area among a plurality of areas managed by a first external electronic device (101), receiving first area information related to the first area from the first external electronic device; and
based on the first area information, determining whether to merge a first thread network partition to which the electronic device belongs with a second thread network partition to which a second external electronic device (102; 300) belongs, or to maintain the first thread network partition independently from the second thread network partition,
wherein the first area information includes first information indicating whether a thread network partition is to be divided based on a position, and second information indicating a position of the first area.

15. The operating method of claim 14, wherein the first information includes a first value indicating that the thread network partition is divided based on the position, or a second value indicating that the thread network partition is not divided based on the position, and
wherein the operating method further comprises receiving first information in which the first value or the second value is changed from the external electronic device.

## Patentansprüche

1. Elektronische Vorrichtung (101), umfassend:
zumindest eine Kommunikationsschaltung (190; 192); und
zumindest einen Prozessor (120; 204), der mit der zumindest einen Kommunikationsschaltung wirkverbunden ist, wobei der zumindest eine Prozessor zu Folgendem konfiguriert ist:
basierend auf Identifizierung einer Registrierungsanforderung für eine externe elektronische Vorrichtung (102; 300), Registrieren der externen elektronischen Vorrichtung, um einem ersten Bereich unter einer Vielzahl von Bereichen zu entsprechen, der durch die elektronische Vorrichtung verwaltet wird, und
Übertragen von Bereichsinformationen in Bezug auf den ersten Bereich an die externe elektronische Vorrichtung über die zumindest eine Kommunikationsschaltung,
wobei die Bereichsinformationen erste Informationen, die angeben, ob eine Thread-Netzwerkpartition basierend auf einer Position geteilt ist, und zweite Informationen, die eine Position des ersten Bereichs angeben, beinhalten.

2. Elektronische Vorrichtung nach Anspruch 1, wobei die ersten Informationen einen ersten Wert, der angibt, dass die Thread-Netzwerkpartition basierend auf der Position geteilt ist, oder einen zweiten Wert, der angibt, dass die Thread-Netzwerkpartition basierend auf der Position nicht geteilt ist, beinhalten, und
wobei der zumindest eine Prozessor ferner zu Folgendem konfiguriert ist:
nach dem Übertragen der Bereichsinformationen, Identifizieren, dass die ersten Informationen, die den ersten Wert oder den zweiten Wert beinhalten, geändert sind, und
Übertragen der geänderten ersten Informationen an die externe elektronische Vorrichtung über die zumindest eine Kommunikationsschaltung.

3. Elektronische Vorrichtung nach Anspruch 1 oder 2, wobei eine Thread-Netzwerkpartition, auf die Bereichsinformationen, in denen die ersten Informationen ein erster Wert sind, der angibt, dass die Thread-Netzwerkpartition basierend auf der Position geteilt ist, und die zweiten Informationen ein vierter Wert sind, der sich von einem dritten Wert unterscheidet, der die Position des ersten Bereichs angibt, angewendet werden, und eine Thread-Netzwerkpartition, auf die Bereichsinformationen, in denen die ersten Informationen der erste Wert sind und die zweiten Informationen der dritte Wert sind, angewendet werden, nicht zusammengeführt werden.

4. Elektronische Vorrichtung nach einem der Ansprüche 1 bis 3, wobei eine Thread-Netzwerkpartition, auf die Bereichsinformationen, in denen die ersten Informationen ein erster Wert sind, der angibt, dass die Thread-Netzwerkpartition basierend auf der Position geteilt ist, und die zweiten Informationen ein dritter Wert sind, der die Position des ersten Bereichs angibt, angewendet werden, und eine andere Thread-Netzwerkpartition, auf welche die Bereichsinformationen, in denen die ersten Informationen der erste Wert sind und die zweiten Informationen der dritte Wert sind, angewendet werden, zusammengeführt werden.

5. Elektronische Vorrichtung nach einem der Ansprüche 1 bis 4, wobei eine Thread-Netzwerkpartition, auf die Bereichsinformationen, in denen die ersten Informationen ein zweiter Wert sind, der angibt, dass die Thread-Netzwerkpartition basierend auf der Position nicht geteilt ist, angewendet werden, und eine andere Thread-Netzwerkpartition, auf welche die Bereichsinformationen, in denen die ersten Informationen der zweite Wert sind, angewendet werden, zusammengeführt werden.

6. Elektronische Vorrichtung (102; 300), umfassend:
zumindest eine Kommunikationsschaltung (302); und
zumindest einen Prozessor (304), der mit der zumindest einen Kommunikationsschaltung wirkverbunden ist, wobei der zumindest eine Prozessor zu Folgendem konfiguriert ist:
basierend darauf, dass die elektronische Vorrichtung dazu registriert ist, einem ersten Bereich unter einer Vielzahl von Bereichen zu entsprechen, der durch eine erste externe elektronische Vorrichtung (101) verwaltet wird, Empfangen, über die zumindest eine Kommunikationsschaltung, von ersten Bereichsinformationen in Bezug auf den ersten Bereich von der ersten externen elektronischen Vorrichtung und,
basierend auf den ersten Bereichsinformationen, Bestimmen, ob eine erste Thread-Netzwerkpartition, zu der die elektronische Vorrichtung gehört, mit einer zweiten Thread-Netzwerkpartition, zu der eine zweite externe elektronische Vorrichtung (102; 300) gehört, zusammenzuführen ist oder die erste Thread-Netzwerkpartition unabhängig von der zweiten Thread-Netzwerkpartition beizubehalten ist, und
wobei die ersten Bereichsinformationen erste Informationen, die angeben, ob eine Thread-Netzwerkpartition basierend auf einer Position zu teilen ist, und zweite Informationen, die eine Position des ersten Bereichs angeben, beinhalten.

7. Elektronische Vorrichtung nach Anspruch 6, wobei der zumindest eine Prozessor ferner zu Folgendem konfiguriert ist:
Übertragen, über die zumindest eine Kommunikationsschaltung, der ersten Bereichsinformationen an eine dritte externe elektronische Vorrichtung (102; 300), die in der ersten Thread-Netzwerkpartition beinhaltet ist.

8. Elektronische Vorrichtung nach Anspruch 6 oder 7, wobei die ersten Informationen einen ersten Wert, der angibt, dass die Thread-Netzwerkpartition basierend auf der Position geteilt ist, oder einen zweiten Wert, der angibt, dass die Thread-Netzwerkpartition basierend auf der Position nicht geteilt ist, beinhalten, und
wobei der zumindest eine Prozessor ferner zu Folgendem konfiguriert ist:
Empfangen, über die zumindest eine Kommunikationsschaltung, von ersten Informationen, in denen der erste Wert oder der zweite Wert geändert ist, von der externen elektronischen Vorrichtung.

9. Elektronische Vorrichtung nach Anspruch 8, wobei der zumindest eine Prozessor ferner zu Folgendem konfiguriert ist:
Übertragen, über die zumindest eine Kommunikationsschaltung, der geänderten ersten Informationen an die dritte externe elektronische Vorrichtung, die in der ersten Thread-Netzwerkpartition beinhaltet ist.

10. Elektronische Vorrichtung nach einem der Ansprüche 6 bis 9, wobei der zumindest eine Prozessor zu Folgendem konfiguriert ist:
Empfangen, über die zumindest eine Kommunikationsschaltung, von zweiten Bereichsinformationen, die auf die zweite Thread-Netzwerkpartition angewendet werden, von einer vierten externen elektronischen Vorrichtung, die in der zweiten Thread-Netzwerkpartition beinhaltet ist,
Identifizieren, ob jede von den ersten Informationen, die in den ersten Bereichsinformationen beinhaltet sind, und den ersten Informationen, die in den zweiten Bereichsinformationen beinhaltet sind, ein erster Wert sind, der angibt, dass die Thread-Netzwerkpartition basierend auf der Position geteilt ist,
basierend darauf, dass jede von den ersten Informationen, die in den ersten Bereichsinformationen beinhaltet sind, und den ersten Informationen, die in den zweiten Bereichsinformationen beinhaltet sind, der erste Wert sind, Identifizieren, ob ein Wert der zweiten Informationen, die in den zweiten Bereichsinformationen beinhaltet sind, identisch mit einem dritten Wert ist, der die Position des ersten Bereichs angibt, der in den zweiten Bereichsinformationen beinhaltet ist, und,
basierend darauf, dass der Wert der zweiten Informationen, die in den zweiten Bereichsinformationen beinhaltet sind, identisch mit dem dritten Wert ist, Bestimmen, die erste Thread-Netzwerkpartition und die zweite Thread-Netzwerkpartition zusammenzuführen.

11. Elektronische Vorrichtung nach Anspruch 10, wobei der zumindest eine Prozessor zu Folgendem konfiguriert ist:
basierend darauf, dass sich der Wert der zweiten Informationen, die in den zweiten Bereichsinformationen beinhaltet sind, von dem dritten Wert unterscheidet, Bestimmen, die erste Thread-Netzwerkpartition unabhängig von der zweiten Thread-Netzwerkpartition beizubehalten.

12. Elektronische Vorrichtung nach einem der Ansprüche 6 bis 11, wobei der zumindest eine Prozessor zu Folgendem konfiguriert ist:
Empfangen, über die zumindest eine Kommunikationsschaltung, von zweiten Bereichsinformationen, die auf die zweite Thread-Netzwerkpartition angewendet werden, von einer vierten externen elektronischen Vorrichtung, die in der zweiten Thread-Netzwerkpartition beinhaltet ist,
Identifizieren, ob ein Wert der ersten Informationen, die in den ersten Bereichsinformationen beinhaltet sind, und ein Wert der ersten Informationen, die in den zweiten Bereichsinformationen beinhaltet sind, identisch sind, und,
basierend darauf, dass der Wert der ersten Informationen, die in den ersten Bereichsinformationen beinhaltet sind, und der Wert der ersten Informationen, die in den zweiten Bereichsinformationen beinhaltet sind, unterschiedlich sind, Bestimmen, die erste Thread-Netzwerkpartition unabhängig von der zweiten Thread-Netzwerkpartition beizubehalten.

13. Elektronische Vorrichtung nach Anspruch 12, wobei der zumindest eine Prozessor zu Folgendem konfiguriert ist:
basierend darauf, dass der Wert der ersten Informationen, die in den ersten Bereichsinformationen beinhaltet sind, und der Wert der ersten Informationen, die in den zweiten Bereichsinformationen beinhaltet sind, identisch sind, Identifizieren, ob der Wert der ersten Informationen, die in den ersten Bereichsinformationen beinhaltet sind, und der Wert der ersten Informationen, die in den zweiten Bereichsinformationen beinhaltet sind, ein zweiter Wert sind, der angibt, dass die Thread-Netzwerkpartition basierend auf der Position nicht geteilt ist,
basierend darauf, dass der Wert der ersten Informationen, die in den ersten Bereichsinformationen beinhaltet sind, und der Wert der ersten Informationen, die in den zweiten Bereichsinformationen beinhaltet sind, ein erster Wert sind, der angibt, dass die Thread-Netzwerkpartition basierend auf der Position geteilt ist, Identifizieren, ob ein Wert der zweiten Informationen, die in den ersten Bereichsinformationen beinhaltet sind, und ein Wert der zweiten Informationen, die in den zweiten Bereichsinformationen beinhaltet sind, identisch sind, und,
basierend darauf, dass der Wert der zweiten Informationen, die in den ersten Bereichsinformationen beinhaltet sind, und der Wert der zweiten Informationen, die in den zweiten Bereichsinformationen beinhaltet sind, nicht identisch sind, Bestimmen, die erste Thread-Netzwerkpartition unabhängig von der zweiten Thread-Netzwerkpartition beizubehalten.

14. Betriebsverfahren einer elektronischen Vorrichtung (102; 300), wobei das Betriebsverfahren Folgendes umfasst:
basierend darauf, dass die elektronische Vorrichtung dazu registriert ist, einem ersten Bereich unter einer Vielzahl von Bereichen zu entsprechen, der durch eine erste externe elektronische Vorrichtung (101) verwaltet wird, Empfangen von ersten Bereichsinformationen in Bezug auf den ersten Bereich von der ersten externen elektronischen Vorrichtung; und,
basierend auf den ersten Bereichsinformationen, Bestimmen, ob eine erste Thread-Netzwerkpartition, zu der die elektronische Vorrichtung gehört, mit einer zweiten Thread-Netzwerkpartition, zu der eine zweite externe elektronische Vorrichtung (102; 300) gehört, zusammenzuführen ist oder die erste Thread-Netzwerkpartition unabhängig von der zweiten Thread-Netzwerkpartition beizubehalten ist,
wobei die ersten Bereichsinformationen erste Informationen, die angeben, ob eine Thread-Netzwerkpartition basierend auf einer Position zu teilen ist, und zweite Informationen, die eine Position des ersten Bereichs angeben, beinhalten.

15. Betriebsverfahren nach Anspruch 14, wobei die ersten Informationen einen ersten Wert, der angibt, dass die Thread-Netzwerkpartition basierend auf der Position geteilt ist, oder einen zweiten Wert, der angibt, dass die Thread-Netzwerkpartition basierend auf der Position nicht geteilt ist, beinhalten, und
wobei das Betriebsverfahren ferner Empfangen von ersten Informationen, in denen der erste Wert oder der zweite Wert geändert ist, von der externen elektronischen Vorrichtung umfasst.

## Revendications

1. Dispositif électronique (101), comprenant :
au moins un circuit de communication (190 ; 192) ; et
au moins un processeur (120 ; 204) connecté fonctionnellement à l'au moins un circuit de communication, ledit au moins un processeur étant configuré pour :
sur la base de l'identification d'une demande d'enregistrement d'un dispositif électronique externe (102 ; 300), enregistrer le dispositif électronique externe pour qu'il corresponde à une première zone parmi une pluralité de zones gérées par le dispositif électronique, et
transmettre des informations de zone relatives à la première zone au dispositif électronique externe par l'intermédiaire du au moins un circuit de communication,
lesdites informations de zone comprenant des premières informations indiquant si une partition de réseau Thread est divisée sur la base d'une position, et des secondes informations indiquant une position de la première zone.

2. Dispositif électronique de la revendication 1, lesdites premières informations comprenant une première valeur indiquant que la partition de réseau Thread est divisée sur la base de la position, ou une deuxième valeur indiquant que la partition de réseau Thread n'est pas divisée sur la base de la position, et
ledit au moins un processeur étant en outre configuré pour :
après la transmission des informations de zone, identifier que les premières informations comprenant la première valeur ou la deuxième valeur, sont modifiées, et
transmettre les premières informations modifiées au dispositif électronique externe par l'intermédiaire du au moins un circuit de communication.

3. Dispositif électronique de la revendication 1 ou 2, une partition de réseau Thread à laquelle
des informations de zone dans lesquelles les premières informations sont une première valeur indiquant que la partition de réseau Thread est divisée sur la base de la position, et les secondes informations sont une quatrième valeur différente d'une troisième valeur indiquant la position de la première zone sont appliquées, et une partition de réseau Thread à laquelle des informations de zone dans lesquelles les premières informations sont la première valeur et les secondes informations sont la troisième valeur sont appliquées n'étant pas fusionnées.

4. Dispositif électronique de l'une quelconque des revendications 1 à 3, une partition de réseau Thread à laquelle des informations de zone dans lesquelles les premières informations sont une première valeur indiquant que la partition de réseau Thread est divisée sur la base de la position, et les secondes informations sont une troisième valeur indiquant la position de la première zone sont appliquées, et une autre partition de réseau Thread à laquelle les informations de zone dans lesquelles les premières informations sont la première valeur et les secondes informations sont la troisième valeur sont appliquées étant fusionnées.

5. Dispositif électronique de l'une quelconque des revendications 1 à 4, une partition de réseau Thread à laquelle des informations de zone dans lesquelles les premières informations sont une deuxième valeur indiquant que la partition de réseau Thread n'est pas divisée sur la base de la position sont appliquées, et une autre partition de réseau Thread à laquelle les informations de zone dans lesquelles les premières informations sont la deuxième valeur sont appliquées étant fusionnées.

6. Dispositif électronique (102 ; 300) comprenant :
au moins un circuit de communication (302) ; et
au moins un processeur (304) connecté fonctionnellement à l'au moins un circuit de communication, ledit au moins un processeur étant configuré pour :
sur la base que le dispositif électronique est enregistré pour correspondre à une première zone parmi une pluralité de zones gérées par un premier dispositif électronique externe (101), recevoir, par l'intermédiaire de l'au moins un
circuit de communication, des premières informations de zone relatives à la première zone en provenance du premier dispositif électronique externe, et
sur la base des premières informations de zone, déterminer si une première partition de réseau Thread à laquelle le dispositif électronique appartient doit être fusionner avec une seconde partition de réseau Thread à laquelle un second dispositif électronique externe (102 ; 300) appartient, ou si la première partition de réseau Thread doit être maintenu indépendamment de la seconde partition de réseau Thread, et
lesdites premières informations de zone comprenant des premières informations indiquant si une partition de réseau Thread doit être divisée sur la base d'une position, et des secondes informations indiquant une position de la première zone.

7. Dispositif électronique de la revendication 6, ledit au moins un processeur étant en outre configuré pour :
transmettre, par l'intermédiaire du au moins un circuit de communication, les premières informations de zone à un troisième dispositif électronique externe (102 ; 300) comprises dans la première partition de réseau Thread.

8. Dispositif électronique de la revendication 6 ou 7, lesdites premières informations comprenant une première valeur indiquant que la partition de réseau Thread est divisée sur la base de la position, ou une deuxième valeur indiquant que la partition de réseau Thread n'est pas divisée sur la base de la position, et
ledit au moins un processeur étant en outre configuré pour :
recevoir, par l'intermédiaire du au moins un circuit de communication, des premières informations dans lesquelles la première valeur ou la deuxième valeur est modifiée, en provenance du dispositif électronique externe.

9. Dispositif électronique de la revendication 8, ledit au moins un processeur étant en outre configuré pour :
transmettre, par l'intermédiaire du au moins un circuit de communication, les premières informations modifiées au troisième dispositif électronique externe comprises dans la première partition de réseau Thread.

10. Dispositif électronique selon l'une quelconque des revendications 6 à 9, ledit au moins un processeur étant configuré pour :
recevoir, par l'intermédiaire du au moins un circuit de communication, des secondes informations de zone appliquées à la seconde partition de réseau Thread à partir d'un quatrième dispositif électronique externe comprises dans la seconde partition de réseau Thread, identifier si chacune des premières informations comprises dans les premières informations de zone et des premières informations comprises dans les secondes informations de zone est une première valeur indiquant que la partition de réseau Thread est divisée sur la base de la position, sur la base que chacune des premières informations comprises dans les premières informations de zone et des premières informations comprises dans les secondes informations de zone sont la première valeur, identifier si une valeur des secondes informations comprises dans les secondes informations de zone est identique à une troisième valeur indiquant la position de la première zone qui est comprise dans les secondes informations de zone, et
sur la base que la valeur des secondes information comprises dans les secondes informations de zone est identique à la troisième valeur, déterminer de fusionner la première partition de réseau Thread et la seconde partition de réseau Thread.

11. Dispositif électronique de la revendication 10, ledit au moins un processeur étant configuré pour :
sur la base que la valeur des secondes informations comprises dans les secondes informations de zone est différente de la troisième valeur, déterminer de maintenir la première partition de réseau Thread indépendamment de la seconde partition de réseau Thread.

12. Dispositif électronique de l'une quelconque des revendications 6 à 11, ledit au moins un processeur étant
configuré pour :
recevoir, par l'intermédiaire du au moins un circuit de communication, des secondes informations de zone appliquées à la seconde partition de réseau Thread à partir d'un quatrième dispositif électronique externe compris dans la seconde partition de réseau Thread, identifier si une valeur des premières informations comprises dans les premières informations de zone et une valeur des premières informations comprises dans les secondes informations de zone sont identiques, et
sur la base que la valeur des premières informations comprises dans les premières informations de zone et la valeur des premières informations comprises dans les secondes informations de zone sont différentes, déterminer de maintenir la première partition de réseau Thread indépendamment de la seconde partition de réseau Thread.

13. Dispositif électronique de la revendication 12, ledit au moins un processeur étant configuré pour :
sur la base que la valeur des premières informations comprises dans les premières informations de zone et la valeur des premières informations comprises dans les secondes informations de zone sont identiques, identifier si la valeur des premières informations comprises dans les premières informations de zone et la valeur des premières informations comprises dans les secondes informations de zone sont une deuxième valeur indiquant que la partition de réseau Thread n'est pas divisée sur la base de la position, sur la base que la valeur des premières informations comprises dans les premières informations de zone et la valeur des premières informations comprises dans les secondes informations de zone sont une première valeur indiquant que la partition de réseau Thread est divisée sur la base de la position, identifier si une valeur des secondes informations comprises dans les premières informations de zone et une valeur des secondes informations comprises dans les secondes informations de zone sont identiques, et
sur la base que la valeur des secondes informations comprises dans les premières informations de zone et la valeur des secondes informations comprises dans les secondes informations de zone ne sont pas identiques, déterminer de maintenir la première partition de réseau Thread indépendamment de la seconde partition de réseau Thread.

14. Procédé de fonctionnement d'un dispositif électronique (102 ; 300), le procédé de fonctionnement comprenant :
sur la base que le dispositif électronique est enregistré pour correspondre à une première zone parmi une pluralité de zones gérées par un premier dispositif électronique externe (101), la réception des premières informations de zone relatives à la première zone en provenance du premier dispositif électronique externe ; et
sur la base des premières informations de zone, déterminer si une première partition de réseau Thread à laquelle le dispositif électronique appartient doit être fusionnée avec une seconde partition de réseau Thread à laquelle un second dispositif électronique externe (102 ; 300) appartient, ou si la première partition de réseau Thread doit être maintenu indépendamment de la seconde partition de réseau Thread, lesdites premières informations de zone comprenant des premières informations indiquant si une partition de réseau Thread doit être divisée sur la base d'une position, et des secondes informations indiquant une position de la première zone.

15. Procédé de fonctionnement de la revendication 14, lesdites premières informations comprenant une première valeur indiquant que la partition de réseau Thread est divisée sur la base de la position, ou une deuxième valeur indiquant que la partition de réseau Thread n'est pas divisée sur la base de la position, et
ledit procédé de fonctionnement comprenant en outre la réception de premières informations dans lesquelles la première valeur ou la deuxième valeur est changée en provenance du dispositif électronique externe.
